(19) Europäisches Patentamt
European Patent Office
Office européen des brevets

(11) **EP 3 475 957 B1**

(12) **EUROPÄISCHE PATENTSCHRIFT**

(45) Veröffentlichungstag und Bekanntmachung des Hinweises auf die Patenterteilung:
**25.03.2020  Patentblatt 2020/13**

(21) Anmeldenummer: **17737738.9**

(22) Anmeldetag: **27.06.2017**

(51) Int Cl.:
*H01B 7/29* (2006.01)       *H01B 7/28* (2006.01)
*C22C 19/05* (2006.01)      *G01K 1/10* (2006.01)
*G01K 7/18* (2006.01)

(86) Internationale Anmeldenummer:
**PCT/EP2017/065837**

(87) Internationale Veröffentlichungsnummer:
**WO 2018/002041 (04.01.2018 Gazette 2018/01)**

(54) **KABEL ZUM KONTAKTIEREN EINES SENSORS, TEMPERATURMESSVORRICHTUNG, VERFAHREN ZUM VERBINDEN EINES KABELS MIT EINER TEMPERATURMESSVORRICHTUNG UND VERWENDUNG EINER LEGIERUNG ZUR HERSTELLUNG EINES KABELS**

CABLE FOR CONTACTING A SENSOR, TEMPERATURE MEASURING DEVICE, METHOD FOR CONNECTING A CABLE TO A TEMPERATURE MEASURING DEVICE AND USE OF AN ALLOY FOR PRODUCING A CABLE

CÂBLE POUR LA MISE EN CONTACT D'UN CAPTEUR, DISPOSITIF DE MESURE DE TEMPÉRATURE, PROCÉDÉ POUR RELIER UN CÂBLE À UN DISPOSITIF DE MESURE DE TEMPÉRATURE ET UTILISATION D'UN ALLIAGE POUR LA FABRICATION D'UN CÂBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2016   DE 102016111738**

(43) Veröffentlichungstag der Anmeldung:
**01.05.2019   Patentblatt 2019/18**

(73) Patentinhaber: **Heraeus Nexensos GmbH 63450 Hanau (DE)**

(72) Erfinder:
• **MUZIOL, Matthias 63533 Mainhausen (DE)**
• **DIETMANN, Stefan 63755 Alzenau (DE)**
• **WIENAND, Karlheinz 63741 Aschaffenburg (DE)**
• **PITZIUS, Peter 66687 Wadern-Nunkirchen (DE)**
• **HECKMANN, Frank 63452 Hanau (DE)**

(74) Vertreter: **Kilchert, Jochen Meissner Bolte Patentanwälte Rechtsanwälte Partnerschaft mbB Widenmayerstraße 47 80538 München (DE)**

(56) Entgegenhaltungen:
**WO-A2-2008/104259      DE-A1-102011 083 373**

**Beschreibung**

Die Erfindung bezieht sich auf ein Kabel zum Kontaktieren eines Sensors, insbesondere eines Temperatursensors, umfassend einen Mantel, ein Dielektrikum und zumindest einen Leiter, wobei der Leiter in dem Mantel derart angeordnet ist, dass der Leiter von dem Mantel mit Hilfe des Dielektrikums räumlich getrennt ist. Außerdem bezieht sich die Erfindung auf eine Temperaturmessvorrichtung, insbesondere zur Anwendung in einem Turbo-Verbrennungsmotor, umfassend einen Sensor, insbesondere einen Temperatursensor, insbesondere einen Platin-Sensor. Des Weiteren bezieht sich die Erfindung auf ein Verfahren zum Verbinden eines Kabels, insbesondere eines erfindungsgemäßen Kabels, mit einer Temperaturmessvorrichtung, insbesondere einer erfindungsgemäßen Temperaturmessvorrichtung. Ferner bezieht sich die Erfindung auf die Verwendung einer Legierung zur Herstellung eines Kabels.

Es ist bekannt, mineralisolierte Kabel zum Bau von Temperaturfühlern zu verwenden. Eine oder mehrere Leitung(en) sind von einer rohrförmigen Abschirmung umschlossen, wobei die einzelnen Komponenten durch einen mineralischen Werkstoff voneinander elektrisch isoliert sind. Derartige Leitungen bzw. Kabel weisen eine begrenzte Temperaturbeständigkeit auf, da die derzeit bekannten Materialien für die Leitungen und die rohrförmige Abschirmung, welche genügend duktil sein müssen, um ziehbar zu sein, lediglich Temperaturen bis 950 °C standhalten. Derartige Leitungen und/oder Kabel weisen eine geringe Korrosionsbeständigkeit des elektrischen Kontakts zum Temperatursensor, insbesondere zum Platinsensor auf. Dies führt zu einer zeitlichen Veränderung des elektrischen Kontaktwiderstandes.

Die konventionelle Herstellung einer mineralisolierten Leitung erfolgt indem in dem Außenrohr das Isolationsmaterial in angesinterter Form sowie die Leiter angeordnet werden. Ein derartiger Rohling wird anschließend in mehreren Schritten gezogen. Gemäß einer bestimmten Reihenfolge werden Rekristallisationsglühungen durchgeführt.

In WO 2008/104259 A2 D1 wird eine Turbolader-Schutzeinrichtung offenbart. Adern aus Nickel-Chromstahl können dabei in einem hochverdichteten mineralischen Pulver eingebettet sein, wobei das mineralische Pulver wiederum von einem schützenden Metallmantel umgeben ist. Bei dem Material des Metallmantels kann es sich um Alloy 601 handeln.

Der Erfindung liegt die Aufgabe zugrunde, ein weiterentwickeltes Kabel anzugeben, das Temperaturen von über 950 °C standhält. Ein derart weiterentwickeltes Kabel soll insbesondere durch Umformtechniken, wie Ziehen, herstellbar sein. Insbesondere soll mit Hilfe eines erfindungsgemäßen Kabels ein elektrischer Kontakt mit einem Sensor, insbesondere einem Temperatursensor, gebildet werden können, der sich zeitlich nicht verändert. Außerdem soll das erfindungsgemäße Kabel kostengünstig und einfach herstellbar sein.

Des Weiteren ist es Aufgabe der vorliegenden Erfindung, eine weiterentwickelte Temperaturmessvorrichtung anzugeben, die ebenfalls hinsichtlich der Temperaturbeständigkeit weiterentwickelt ist. Vorzugsweise soll die erfindungsgemäße Temperaturmessvorrichtung ein erfindungsgemäßes Kabel umfassen.

Eine weitere Aufgabe der Erfindung besteht darin, ein Verfahren zum Verbinden eines Kabels mit einer Temperaturmessvorrichtung anzugeben. Ferner besteht eine Aufgabe der Erfindung darin, die Verwendung einer Legierung bzw. eine Legierung zur Herstellung eines erfindungsgemäßen Kabels anzugeben.

Weiterhin ist eine Hülse offenbart die Temperaturen von über 950 °C standhält. Außerdem soll die Hülse kostengünstig und einfach herstellbar sein, wobei eine Hülse vorzugsweise aus einem einzigen Bauteil besteht.

Erfindungsgemäß wird diese Aufgabe im Hinblick auf das Kabel durch die Merkmale des Anspruchs 1 gelöst. Im Hinblick auf eine Temperaturmessvorrichtung wird die Aufgabe durch die Merkmale des Anspruchs 15 gelöst. Im Hinblick auf ein Verfahren zum Verbinden eines Kabels mit einer Temperaturmessvorrichtung wird durch die Aufgabe durch die Merkmale des Anspruchs 17 gelöst. Im Hinblick auf die Verwendung einer Legierung wird die Aufgabe durch die Merkmale des Anspruchs 18 gelöst.

Die Erfindung beruht auf dem Gedanken, ein Kabel zum Kontaktieren eines Sensors, insbesondere eines Temperatursensors, anzugeben, wobei das Kabel einen Mantel, ein Dielektrikum und zumindest einen Leiter umfasst, wobei der mindestens eine Leiter in dem Mantel derart angeordnet ist, dass der Leiter von dem Mantel mit Hilfe des Dielektrikums räumlich getrennt ist.

Der mindestens eine Leiter und/oder der Mantel ist/sind aus einer Nickel-Chrom-Aluminium-Eisen-Legierung gebildet, wobei die Legierung

25,0 - 28,0 Gew.-% Chrom (Cr),
2,0 - 3,0 Gew.-% Aluminium (Al),
1,0 - 11,0 Gew.-% Eisen (Fe),
0,01 - 0,2 Gew.-% Silizium (Si),
0,005 - 0,5 Gew.-% Mangan (Mn),
0,01 - 0,20 Gew.-% Yttrium (Y),
0,02 - 0,60 Gew.-% Titan (Ti),
0,01 - 0,2 Gew.-% Zirkon (Zr),
0,0002 - 0,05 Gew.-% Magnesium (Mg),

0,0001 - 0,05 Gew.-% Kalzium (Ca),
0,03 - 0,11 Gew.-% Kohlenstoff (C),
0,003 - 0,05 Gew.-% Stickstoff (N),
0,0005 - 0,008 Gew.-% Bor (B),
0,0001 - 0,010 Gew.-% Sauerstoff (O),
0,001 - 0,030 Gew.-% Phosphor (P),
höchstens 0,010 Gew.-% Schwefel (S),
höchstens 0,5 Gew.-% Molybdän (Mo),
höchstens 0,5 Gew.-% Wolfram (W) und
Rest Nickel (Ni) aufweist.

Die genannten Bestandteile der Legierung können sich in beliebiger Kombination zu 100 % ergänzen. Dies gilt auch für die nachfolgend dargestellten Ausführungsbeispiele.

Ein Kabel, dessen Leiter und/oder dessen Mantel aus einer Nickel-Chrom-Aluminium-Eisen-Legierung gebildet ist/sind, ist besonders temperaturbeständig. Insbesondere ist eine derartige Legierung dazu ausgelegt, Temperaturen von weit über 950 °C dauerhaft standzuhalten bzw. eine Temperaturbeständigkeit von mindestens 950 °C aufzuweisen.

Ein erfindungsgemäßes Kabel, das aus einer Nickel-Chrom-Aluminium-Eisen-Legierung mit den angegebenen Legierungsbestandteilen besteht oder diese aufweist, kann demnach insbesondere in Motorsystemen von Fahrzeugen verwendet werden.

Bei ausreichend hohen Nickelgehalten und/oder Chromgehalten und/oder Aluminiumgehalten, weist die Legierung des erfindungsgemäßen Kabels eine gute Verarbeitbarkeit, d.h. eine gute Umformbarkeit oder Tiefziehbarkeit oder Schweißbarkeit auf. Außerdem weist dieses Material eine gute Korrosionsbeständigkeit auf. Des Weiteren ist das Material durch eine gute Warmfestigkeit und durch eine gute Kriechbeständigkeit gekennzeichnet.

Die Legierung kann Verunreinigungen, insbesondere verfahrensbedingte Verunreinigungen, aufweisen. Bei den Verunreinigungen kann es sich um die Elemente Kupfer (Cu) und/oder Blei (Pb) und/oder Zink (Zn) und/oder Zinn (Sn) handeln.

Insbesondere sind die Verunreinigungen in Gehalten von höchstens 0,5 Gew.-% Kupfer (Cu), höchstens 0,002 Gew.-% Blei (Pb), höchstens 0,002 Gew.-% Zink (Zn), höchstens 0,002 Gew.-% Zinn (Sn) eingestellt.

Sofern die Legierung Titan (Ti), Zirkon (Zr), Stickstoff (N) und Kohlenstoff (C) aufweist, sind zwischen Titan, Zirkon, Stickstoff und Kohlenstoff vorzugsweise folgende Wechselwirkungen erfüllt:

(1) 0 > 7,7C - x•a < 1,0
(2) mit a = PN, wenn PN > 0
(3) bzw. a = 0, wenn PN ≤ 0
(4) und

$$x = (1,0Ti + 1,06Zr)/(0,251Ti + 0,132Zr)$$

(5) wobei

$$PN = 0,251Ti + 0,132Zr - 0,857N,$$

wobei Ti, Zr, N, C die Konzentration der betreffenden Elemente in Gew.-% sind. 7,7C - x•a kann 0,3392 - 0,5088 betragen.

PN kann 0,02672 - 0,04008 betragen.

Besonders bevorzugt gilt, dass 7,7 C - x•a = 0,424. Außerdem ist PN in einer besonders bevorzugten Ausführungsform der Erfindung 0,0334.

Es ist möglich, dass die Legierung
25,3 - 26,3 Gew.-% Chrom (Cr), insbesondere 25,3 Gew.-% Chrom (Cr),
2,1 - 2,4 Gew.-% Aluminium (Al), insbesondere 2,27 Gew.-% Aluminium (Al),
9,0 - 10,5 Gew.-% Eisen (Fe), insbesondere 9,8 Gew.-% Eisen (Fe),
0,03 - 0,07 Gew.-% Silizium (Si), insbesondere 0,05 Gew.-% Silizium (Si),
0,01 - 0,03 Gew.-% Mangan (Mn), insbesondere 0,02 Gew.-% Mangan (Mn),
0,05 - 0,09 Gew.-% Yttrium (Y), insbesondere 0,07 Gew.-% Yttrium (Y),
0,15 - 0,20 Gew.-% Titan (Ti), insbesondere 0,18 Gew.-% Titan (Ti),
0,04 - 0,08 Gew.-% Zirkon (Zr), insbesondere 0,06 Gew.-% Zirkon (Zr),
0,01 - 0,015 Gew.-% Magnesium (Mg), insbesondere 0,013 Gew.-% Magnesium (Mg),
0,0015 - 0,0025 Gew.-% Kalzium (Ca), insbesondere 0,002 Gew.-% Kalzium (Ca),

0,05 - 0,09 Gew.-% Kohlenstoff (C), insbesondere 0,075 Gew.-% Kohlenstoff (C),
0,02 - 0,025 Gew.-% Stickstoff (N), insbesondere 0,023 Gew.-% Stickstoff (N),
0,0025 - 0,0035 Gew.-% Bor (B), insbesondere 0,003 Gew.-% Bor (B),
0,001 - 0,0015 Gew.-% Sauerstoff (O), insbesondere 0,0013 Gew.-% Sauerstoff (O),
0,0025 - 0,0035 Gew.-% Phosphor (P), insbesondere 0,003 Gew.-% Phosphor (P),
0,0025 - 0,0035 Gew.-% Schwefel (S), insbesondere 0,003 Gew.-% Schwefel (S),
60,0 - 64,0 Gew.-% Nickel (Ni), insbesondere 62,0 Gew.-% Nickel (Ni),
0,008 - 0,012 Gew.-% Kupfer (Cu), insbesondere 0,01 Gew.-% Kupfer (Cu),
0,036 - 0,044 Gew.-% Cobalt (Co), insbesondere 0,04 Gew.-% Cobalt (Co),
weniger als 0,01 Gew.-% Molybdän (Mo),
weniger als 0,01 Gew.-% Wolfram (W),
weniger als 0,01 Gew.-% Hafnium (Hf),
weniger als 0,01 Gew.-% Niob (Nb),
weniger als 0,01 Gew.-% Vanadium (V),
weniger als 0,01 Gew.-% Lanthan (La),
weniger als 0,01 Gew.-% Tantal (Ta) und
weniger als 0,01 Gew.-% Cer (Ce)
aufweist.

Eine derartige Legierung ist besonders gut geeignet für die Herstellung von zu ziehenden Teilen.

Die Legierung des erfindungsgemäßen Kabels kann zusammenfassend die nachfolgenden angegebenen Elemente aufweisen:
Der Chromgehalt (Cr) liegt bei 25,0 - 28,0 Gew.-%, insbesondere bei 25,3 - 26,3 Gew.-%, insbesondere bei 25,3 Gew.-%.

Der Aluminiumgehalt (Al) liegt bei bei 2,0 - 3,0 Gew.-%, insbesondere bei 2,1 - 2,4 Gew.-%, insbesondere bei 2,27 Gew.-%.

Der Eisengehalt (Fe) liegt bei 1,0 - 11,0 Gew.-%, insbesondere bei 9,0 - 10,5 Gew.-%, insbesondere bei 9,8 Gew.-%.

Der Nickelgehalt liegt bei 50,0 - 89,0 Gew.-%, insbesondere bei 60,0 - 64,0 Gew.-%, insbesondere bei 62,0 Gew.-%.

Des Weiteren kann die Legierung 0,01 - 0,2 Gew.-%, insbesondere 0,03 - 0,07 Gew.-%, insbesondere 0,05 Gew.-%, Silizium (Si) aufweisen.

Außerdem kann die Legierung 0,005 - 0,5 Gew.-%, insbesondere 0,01 - 0,03 Gew.-%, insbesondere 0,02 Gew.-%, Mangan (Mn) aufweisen.

Des Weiteren kann die Legierung 0,01 - 0,20 Gew.-%, insbesondere 0,05 - 0,09 Gew.-%, insbesondere 0,07 Gew.-%, Yttrium (Y) aufweisen.

Des Weiteren kann die Legierung 0,02 - 0,60 Gew.-%, insbesondere 0,15 - 0,20 Gew.-%, insbesondere 0,18 Gew.-%, Titan (Ti) aufweisen.

Des Weiteren kann die Legierung 0,01 - 0,2 Gew.-%, insbesondere 0,04 - 0,08 Gew.-%, insbesondere 0,06 Gew.-%, Zirkon (Zr) aufweisen.

Des Weiteren kann die Legierung 0,002 - 0,05 Gew.-%, insbesondere 0,01 - 0,015 Gew.-%, insbesondere 0,013 Gew.-%, Magnesium (Mg) aufweisen.

Des Weiteren kann die Legierung 0,0001 - 0,05 Gew.-%, insbesondere 0,0015 - 0,0025 Gew.-%, insbesondere 0,0002 Gew.-%, Kalzium (Ca) aufweisen.

Des Weiteren kann die Legierung 0,03 - 0,11 Gew.-%, insbesondere 0,05 - 0,09 Gew.-%, insbesondere 0,075 Gew.-%, Kohlenstoff (C) aufweisen.

Des Weiteren kann die Legierung 0,003 - 0,05 Gew.-%, insbesondere 0,02 - 0,025 Gew.-%, insbesondere 0,023 Gew.-%, Stickstoff (N) aufweisen.

Des Weiteren kann die Legierung 0,0005 - 0,008 Gew.-%, insbesondere 0,0025 - 0,0035 Gew.-%, insbesondere 0,003 Gew.-%, Bor (B) aufweisen.

Des Weiteren kann die Legierung 0,0001 - 0,010 Gew.-%, insbesondere 0,001 - 0,0015 Gew.-%, insbesondere 0,0013 Gew.-%, Sauerstoff (O) aufweisen.

Des Weiteren kann die Legierung 0,001 - 0,030 Gew.-%, insbesondere 0,0025 - 0,0035 Gew.-%, insbesondere 0,003 Gew.-%, Phosphor (P) aufweisen.

Des Weiteren kann die Legierung höchstens 0,010 Gew.-%, insbesondere 0,0025 - 0,0035 Gew.-%, insbesondere 0,003 Gew.-%, Schwefel (S) aufweisen.

Des Weiteren kann die Legierung höchstens 0,5 Gew.-%, insbesondere weniger als 0,01 Gew.-%, Molybdän (Mo) aufweisen.

Des Weiteren kann die Legierung höchstens 0,5 Gew.-%, insbesondere weniger als 0,01 Gew.-%, Wolfram (W) aufweisen.

Des Weiteren kann die Legierung höchstens 0,5 Gew.-%, insbesondere 0,008 - 0,012 Gew.-%, insbesondere 0,01 Gew.-%, Kupfer (Cu) aufweisen.

Des Weiteren kann die Legierung höchstens 0,002 Gew.-% Blei (Pb) aufweisen.

Des Weiteren kann die Legierung höchstens 0,002 Gew.-% Zink (Zn) aufweisen.

Des Weiteren kann die Legierung höchstens 0,002 Gew.-% Zinn (Sn) aufweisen.

Des Weiteren kann die Legierung 0,036 - 0,044 Gew.-%, insbesondere 0,04 Gew.-%, Kobalt (Co) aufweisen.

Des Weiteren kann die Legierung weniger als 0,01 Gew.-% Hafnium (Hf) aufweisen.

Des Weiteren kann die Legierung weniger als 0,01 Gew.-% Niob (Nb) aufweisen.

Des Weiteren kann die Legierung weniger als 0,01 Gew.-% Vanadium (V) aufweisen.

Des Weiteren kann die Legierung weniger als 0,01 Gew.-% Lanthan (La) aufweisen.

Des Weiteren kann die Legierung weniger als 0,01 Gew.-% Tantal (Ta) aufweisen.

Des Weiteren kann die Legierung weniger als 0,01 Gew.-% Cer (Ce) aufweisen.

Vorzugsweise ist das Kabel dadurch gekennzeichnet, dass der Mantel und der mindestens eine Leiter zusammen mit dem Dielektrikum umgeformt, insbesondere gezogen, sind, so dass das Kabel entsteht.

Die Bruchdehnung des Ausgangsmaterials des Mantels und/oder des mindestens einen Leiters kann vor dem Umformen des Mantels und/oder des mindestens einen Leiters zusammen mit dem Dielektrikum, insbesondere vor dem Ziehen des Mantels und/oder des mindestens einen Leiters zusammen mit dem Dielektrikum, mindestens 50 %, vorzugsweise mindestens 60 %, betragen.

Mit anderen Worten ist die Bruchdehnung, insbesondere die Bruchdehnung ($A_5$), des Ausgangsmaterials vor dem Umformen des Mantels und/oder des mindestens einen Leiters, insbesondere vor dem Ziehen des Mantels und/oder des mindestens einen Leiters zusammen mit dem Dielektrikum, mindestens 50 %, vorzugsweise mindestens 60 %.

Die Verformbarkeit wird durch einen Zugversuch gemäß DIN EN ISO 6892-1 bei Raumtemperatur bestimmt.

Die Dehnungsgrenze $R_{p0,2}$, die Zugfestigkeit $R_m$ und die Dehnung A wird bis zum Bruch bestimmt. Die Dehnung A wird an der gebrochenen Probe aus der Verlängerung der ursprünglichen Messstrecke $L_0$ bestimmt:

$$A = (L_U - L_0)/L_0 \; 100 \% = \Delta L/L_0 \; 100 \%.$$

Dabei gilt: $L_U$ = Messlänge nach dem Bruch. Je nach Messlänge wird die Bruchdehnung mit Indizes versehen. Zum Beispiel ist für $A_5$ die Messlänge
$L_0 = 5 \cdot d_0$ mit $d_0$ = Anfangsdurchmesser einer Rundprobe.

Die Versuche werden an Rundproben mit einem Durchmesser von 6 mm im Messbereich und einer Messlänge $L_0$ von 30 mm durchgeführt. Die Probennahme erfolgt quer zur Umformrichtung des Halbzeuges. Die Umformgeschwindigkeit beträgt bei $R_{p0,2}$ 10 MPA/s und bei $R_m$ 6,7 $10^{-3}$ 1/s (40 %/min).

In einer bevorzugten Ausführungsform der Erfindung kann das Kabel zumindest zwei Leiter aufweisen, die derart in dem Mantel angeordnet sind, dass der jeweilige Leiter von dem Mantel mit Hilfe des Dielektrikums räumlich getrennt ist und die jeweiligen Leiter in dem Mantel mit Hilfe des Dielektrikums räumlich voneinander getrennt sind.

Vorzugsweise weist der Mantel eine Materialstärke von 0,4 mm bis 0,7 mm auf. Vorzugsweise ist der Mantel rohrförmig ausgebildet.

Der Mantel kann einen Durchmesser von 3,0 mm bis 6,0 mm, insbesondere von 4,5 mm bis 6,0 mm, aufweisen. Ein/der Leiter kann eine Materialdicke von 0,25 mm bis 1,0 mm, insbesondere von 0,3 mm bis 0,7 mm, insbesondere von 0,45 mm bis 0,55 mm, besonders bevorzugt von 0,5 mm, aufweisen. Vorzugsweise ist der Leiter drahtförmig ausgebildet.

Es ist möglich, dass mindestens ein Teil mindestens eines Leiters zumindest abschnittsweise S-förmig ausgebildet ist. Mit anderen Worten kann ein Teil mindestens eines Leiters S-förmig ausgebildet sein. Vorzugsweise weist der Leiter im Bereich einer elektrischen Kontaktierung eine S-Form auf. Eine derartige S-Form stellt ein mechanisches Ausgleichselement dar. Die bei schnellen Temperaturwechseln vorkommende Spannung, insbesondere die thermische Ausdehnung, wird durch diese S-Form kompensiert. Eine derartige S-Form wird beispielsweise durch Umformprägen hergestellt.

Alternativ können diese Zugspannungen kompensierenden Strukturen auch als Lyraschleifen oder als Spiralen ausgebildet sein.

Das Dielektrikum kann einen mineralischen Werkstoff, insbesondere Magnesiumoxid (MgO) und/oder Aluminiumoxid ($Al_2O_3$) und/oder Mischungen aus beiden, besonders bevorzugt eine Mischung aus Magnesiumoxid (MgO) und Aluminiumoxid ($Al_2O_3$) mit 10-20 Gew.-% Aluminiumoxid ($Al_2O_3$), aufweisen.

Das Dielektrikum kann in dem Mantel nach dem Umformen hoch verdichtet vorliegen.

Das erfindungsgemäße Kabel weist eine Temperaturbeständigkeit von mindestens 1.000 °C, insbesondere von mindestens 1.100 °C, auf. Die Temperaturbeständigkeit des erfindungsgemäßen Kabels kann kurzfristig über 1.200 °C betragen.

Es wird ein erfindungsgemäßes Kabel zur Verfügung gestellt, das zum einen kostengünstig herstellbar ist. Zum anderen weist das erfindungsgemäße Kabel eine hohe Temperaturbeständigkeit sowie eine geringe Oxidationsneigung auf. Insbesondere ist eine geringe Oxidationsneigung auch bei Temperaturen von über 950 °C gegeben.

Ein weiterer Aspekt der Erfindung betrifft eine Temperaturmessvorrichtung, insbesondere zur Anwendung in einem Turbo-Verbrennungsmotor. Insbesondere betrifft der Aspekt der Erfindung eine Temperaturmessvorrichtung zur Anwendung in einem Turbo-Ottomotor. Die erfindungsgemäße Temperaturmessvorrichtung ist dadurch gekennzeichnet, dass die Temperaturmessvorrichtung einen Sensor, insbesondere einen Temperatursensor, insbesondere einen Platin-Sensor, umfasst und der Sensor mit zumindest einem erfindungsgemäßen Kabel verbunden ist.

Der Sensor kann zumindest einen Anschlussdraht, insbesondere der Temperatursensor kann zumindest einen Platinanschlussdraht, aufweisen, wobei der Draht, insbesondere der Platinanschlussdraht, mit dem zumindest einen Leiter des Kabels verbunden, insbesondere verschweißt, vorzugsweise laserverschweißt, ist.

Die Temperaturmessvorrichtung kann des Weiteren eine Hülse, insbesondere eine Schutzkappe, aufweisen.

In einem nebengeordneten Aspekt ist eine Hülse, insbesondere eine Schutzkappe, zur Abdeckung des Sensors, insbesondere zur Abdeckung eines Temperatursensors offenbart, wobei die Hülse aus einer Nickel-Chrom-Aluminium-Eisen-Legierung gebildet ist, wobei die Legierung

10,0 - 30,0 Gew.-% Chrom (Cr),

0,5 - 5,0 Gew.-% Aluminium (Al),

0,5 - 15,0 Gew.-% Eisen (Fe) und

50,0 - 89,0 Gew.-% Nickel (Ni)

aufweist.

Die genannten Bestandteile der Legierung können sich in beliebiger Kombination zu 100 % ergänzen. Dies gilt auch für die nachfolgend dargestellten Ausführungsbeispiele.

Vorzugsweise weist die beschriebene Temperaturvorrichtung eine Hülse auf.

Eine Hülse, die aus einer Nickel-Chrom-Aluminium-Eisen-Legierung gebildet ist, ist besonders temperaturbeständig. Insbesondere ist eine derartige Legierung dazu ausgelegt, Temperaturen von weit über 950 °C standzuhalten bzw. eine Temperaturbeständigkeit von mindestens 950 °C aufzuweisen.

Eine Hülse, die aus einer Nickel-Chrom-Aluminium-Eisen-Legierung mit den angegebenen Legierungsbestandteilen besteht oder diese aufweist, kann demnach insbesondere in Motorsystemen von Fahrzeugen verwendet werden.

Bei ausreichend hohen Nickelgehalten und/oder Chromgehalten und/oder Aluminiumgehalten, weist die Legierung der Hülse eine gute Verarbeitbarkeit, d.h. eine gute Umformbarkeit oder Tiefziehbarkeit oder Schweißbarkeit auf. Außerdem weist dieses Material eine gute Korrosionsbeständigkeit auf. Des Weiteren ist das Material durch eine gute Warmfestigkeit und durch eine gute Kriechbeständigkeit gekennzeichnet.

In einer Ausführungsform der Erfindung kann die Legierung

25,0 - 28,0 Gew.-% Chrom (Cr),

2,0 - 3,0 Gew.-% Aluminium (Al),

1,0 - 11,0 Gew.-% Eisen (Fe),

0,01 - 0,2 Gew.-% Silizium (Si),

0,005 - 0,5 Gew.-% Mangan (Mn),

0,01 - 0,20 Gew.-% Yttrium (Y),

0,02 - 0,60 Gew.-% Titan (Ti),

0,01 - 0,2 Gew.-% Zirkon (Zr),

0,0002 - 0,05 Gew.-% Magnesium (Mg),

0,0001 - 0,05 Gew.-% Kalzium (Ca),

0,03 - 0,11 Gew.-% Kohlenstoff (C),

0,003 - 0,05 Gew.-% Stickstoff (N),

0,0005 - 0,008 Gew.-% Bor (B),

0,0001 - 0,010 Gew.-% Sauerstoff (O),

0,001 - 0,030 Gew.-% Phosphor (P),

höchstens 0,010 Gew.-% Schwefel (S),

höchstens 0,5 Gew.-% Molybdän (Mo),

höchstens 0,5 Gew.-% Wolfram (W) und

Rest Nickel (Ni)

aufweisen.

Die Legierung kann Verunreinigungen, insbesondere verfahrensbedingte Verunreinigungen, aufweisen. Bei den Verunreinigungen kann es sich um die Elemente Kupfer (Cu) und/oder Blei (Pb) und/oder Zink (Zn) und/oder Zinn (Sn) handeln.

Insbesondere sind die Verunreinigungen in Gehalten von höchstens 0,5 Gew.-% Kupfer (Cu), höchstens 0,002 Gew.-% Blei (Pb), höchstens 0,002 Gew.-% Zink (Zn), höchstens 0,002 Gew.-% Zinn (Sn) eingestellt.

Sofern die Legierung Titan (Ti), Zirkon (Zr), Stickstoff (N) und Kohlenstoff (C) aufweist, sind zwischen Titan, Zirkon, Stickstoff und Kohlenstoff vorzugsweise folgende Wechselwirkungen erfüllt:

(1) $0 > 7,7C - x \cdot a < 1,0$
(2) mit a = PN, wenn PN > 0
(3) bzw. a = 0, wenn PN ≤ 0
(4) und

$$x = (1,0Ti + 1,06Zr)/(0,251Ti + 0,132Zr)$$

(5) wobei

$$PN = 0,251Ti + 0,132Zr - 0,857N,$$

wobei Ti, Zr, N, C die Konzentration der betreffenden Elemente in Gew.-% sind.

7,7C - x·a kann 0,3392 - 0,5088 betragen.

PN kann 0,02672 - 0,04008 betragen.

Besonders bevorzugt gilt, dass 7,7 C - x·a = 0,424. Außerdem ist PN in einer besonders bevorzugten Ausführungsform der Erfindung 0,0334.

Es ist möglich, dass die Legierung

24,3 - 26,3 Gew.-% Chrom (Cr), insbesondere 25,3 Gew.-% Chrom (Cr),
2,1 - 2,4 Gew.-% Aluminium (Al), insbesondere 2,27 Gew.-% Aluminium (Al),
9,0 - 10,5 Gew.-% Eisen (Fe), insbesondere 9,8 Gew.-% Eisen (Fe),
0,03 - 0,07 Gew.-% Silizium (Si), insbesondere 0,05 Gew.-% Silizium (Si),
0,01 - 0,03 Gew.-% Mangan (Mn), insbesondere 0,02 Gew.-% Mangan (Mn),
0,05 - 0,09 Gew.-% Yttrium (Y), insbesondere 0,07 Gew.-% Yttrium (Y),
0,15 - 0,20 Gew.-% Titan (Ti), insbesondere 0,18 Gew.-% Titan (Ti),
0,04 - 0,08 Gew.-% Zirkon (Zr), insbesondere 0,06 Gew.-% Zirkon (Zr),
0,01 - 0,015 Gew.-% Magnesium (Mg), insbesondere 0,013 Gew.-% Magnesium (Mg),
0,0015 - 0,0025 Gew.-% Kalzium (Ca), insbesondere 0,002 Gew.-% Kalzium (Ca),
0,05 - 0,09 Gew.-% Kohlenstoff (C), insbesondere 0,075 Gew.-% Kohlenstoff (C),
0,02 - 0,025 Gew.-% Stickstoff (N), insbesondere 0,023 Gew.-% Stickstoff (N),
0,0025 - 0,0035 Gew.-% Bor (B), insbesondere 0,003 Gew.-% Bor (B),
0,001 - 0,0015 Gew.-% Sauerstoff (O), insbesondere 0,0013 Gew.-% Sauerstoff (O),
0,0025 - 0,0035 Gew.-% Phosphor (P), insbesondere 0,003 Gew.-% Phosphor (P),
0,0025 - 0,0035 Gew.-% Schwefel (S), insbesondere 0,003 Gew.-% Schwefel (S),
60,0 - 64,0 Gew.-% Nickel (Ni), insbesondere 62,0 Gew.-% Nickel (Ni),
0,008 - 0,012 Gew.-% Kupfer (Cu), insbesondere 0,01 Gew.-% Kupfer (Cu),
0,036 - 0,044 Gew.-% Cobalt (Co), insbesondere 0,04 Gew.-% Cobalt (Co),
weniger als 0,01 Gew.-% Molybdän (Mo),
weniger als 0,01 Gew.-% Wolfram (W),
weniger als 0,01 Gew.-% Hafnium (Hf),
weniger als 0,01 Gew.-% Niob (Nb),
weniger als 0,01 Gew.-% Vanadium (V),
weniger als 0,01 Gew.-% Lanthan (La),
weniger als 0,01 Gew.-% Tantal (Ta) und
weniger als 0,01 Gew.-% Cer (Ce)
aufweist.

Eine derartige Legierung ist besonders gut geeignet für die Herstellung von Tiefziehteilen.

Die Legierung der Hülse kann zusammenfassend die nachfolgenden angegebenen Elemente aufweisen: Der Chromgehalt (Cr) liegt bei 10,0 - 30,0 Gew.-%, insbesondere bei 25,0 - 28,0 Gew.-%, insbesondere bei 24,3 - 26,3 Gew.-%, insbesondere bei 25,3 Gew.-%.

Der Aluminiumgehalt (Al) liegt bei 0,5 - 5,0 Gew.-%, insbesondere bei 2,0 - 3,0 Gew.-%, insbesondere bei 2,1 - 2,4 Gew.-%, insbesondere bei 2,27 Gew.-%.

Der Eisengehalt (Fe) liegt bei 0,5 - 15,0 Gew.-%, insbesondere bei 1,0 - 11,0 Gew.-%, insbesondere bei 9,0 - 10,5 Gew.-%, insbesondere bei 9,8 Gew.-%.

Der Nickelgehalt liegt bei 50,0 - 89,0 Gew.-%, insbesondere bei 60,0 - 64,0 Gew.-%, insbesondere bei 62,0 Gew.-%.

Des Weiteren kann die Legierung 0,01 - 0,2 Gew.-%, insbesondere 0,03 - 0,07 Gew.-%, insbesondere 0,05 Gew.-%, Silizium (Si) aufweisen.

Außerdem kann die Legierung 0,005 - 0,5 Gew.-%, insbesondere 0,01 - 0,03 Gew.-%, insbesondere 0,02 Gew.-%, Mangan (Mn) aufweisen.

Des Weiteren kann die Legierung 0,01 - 0,20 Gew.-%, insbesondere 0,05 - 0,09 Gew.-%, insbesondere 0,07 Gew.-%, Yttrium (Y) aufweisen.

Des Weiteren kann die Legierung 0,02 - 0,60 Gew.-%, insbesondere 0,15 - 0,20 Gew.-%, insbesondere 0,18 Gew.-%, Titan (Ti) aufweisen.

Des Weiteren kann die Legierung 0,01 - 0,2 Gew.-%, insbesondere 0,04 - 0,08 Gew.-%, insbesondere 0,06 Gew.-%, Zirkon (Zr) aufweisen.

Des Weiteren kann die Legierung 0,002 - 0,05 Gew.-%, insbesondere 0,01 - 0,015 Gew.-%, insbesondere 0,013 Gew.-%, Magnesium (Mg) aufweisen.

Des Weiteren kann die Legierung 0,0001 - 0,05 Gew.-%, insbesondere 0,0015 - 0,0025 Gew.-%, insbesondere 0,0002 Gew.-%, Kalzium (Ca) aufweisen.

Des Weiteren kann die Legierung 0,03 - 0,11 Gew.-%, insbesondere 0,05 - 0,09 Gew.-%, insbesondere 0,075 Gew.-%, Kohlenstoff (C) aufweisen.

Des Weiteren kann die Legierung 0,003 - 0,05 Gew.-%, insbesondere 0,02 - 0,025 Gew.-%, insbesondere 0,023 Gew.-%, Stickstoff (N) aufweisen.

Des Weiteren kann die Legierung 0,0005 - 0,008 Gew.-%, insbesondere 0,0025 - 0,0035 Gew.-%, insbesondere 0,003 Gew.-%, Bor (B) aufweisen.

Des Weiteren kann die Legierung 0,0001 - 0,010 Gew.-%, insbesondere 0,001 - 0,0015 Gew.-%, insbesondere 0,0013 Gew.-%, Sauerstoff (O) aufweisen.

Des Weiteren kann die Legierung 0,001 - 0,030 Gew.-%, insbesondere 0,0025 - 0,0035 Gew.-%, insbesondere 0,003 Gew.-%, Phosphor (P) aufweisen.

Des Weiteren kann die Legierung höchstens 0,010 Gew.-%, insbesondere 0,0025 - 0,0035 Gew.-%, insbesondere 0,003 Gew.-%, Schwefel (S) aufweisen.

Des Weiteren kann die Legierung höchstens 0,5 Gew.-%, insbesondere weniger als 0,01 Gew.-%, Molybdän (Mo) aufweisen.

Des Weiteren kann die Legierung höchstens 0,5 Gew.-%, insbesondere weniger als 0,01 Gew.-%, Wolfram (W) aufweisen.

Des Weiteren kann die Legierung höchstens 0,5 Gew.-%, insbesondere 0,008 - 0,012 Gew.-%, insbesondere 0,01 Gew.-%, Kupfer (Cu) aufweisen.

Des Weiteren kann die Legierung höchstens 0,002 Gew.-% Blei (Pb) aufweisen.

Des Weiteren kann die Legierung höchstens 0,002 Gew.-% Zink (Zn) aufweisen.

Des Weiteren kann die Legierung höchstens 0,002 Gew.-% Zinn (Sn) aufweisen.

Des Weiteren kann die Legierung 0,036 - 0,044 Gew.-%, insbesondere 0,04 Gew.-%, Kobalt (Co) aufweisen.

Des Weiteren kann die Legierung weniger als 0,01 Gew.-% Hafnium (Hf) aufweisen.

Des Weiteren kann die Legierung weniger als 0,01 Gew.-% Niob (Nb) aufweisen.

Des Weiteren kann die Legierung weniger als 0,01 Gew.-% Vanadium (V) aufweisen.

Des Weiteren kann die Legierung weniger als 0,01 Gew.-% Lanthan (La) aufweisen.

Des Weiteren kann die Legierung weniger als 0,01 Gew.-% Tantal (Ta) aufweisen.

Des Weiteren kann die Legierung weniger als 0,01 Gew.-% Cer (Ce) aufweisen.

Vorzugsweise ist die Hülse dadurch gekennzeichnet, dass diese umgeformt, insbesondere tiefgezogen, ist. Die Hülse ist somit einteilig bzw. monolithisch ausgebildet. Es sind somit keine weiteren Verfahrensschritte notwendig, um einzelne Hülsenteile miteinander zu verbinden. Des Weiteren ist die Ausbildung der Hülse als umgeformtes Bauteil, insbesondere als tiefgezogenes Bauteil, dahingehend vorteilhaft, als dass die Hülse nicht an einer Verbindungsstelle gelöst und/oder zerstört werden kann.

Die Bruchdehnung des Ausgangsmaterials der Hülse kann vor dem Umformen der Hülse, insbesondere vor dem Tiefziehen der Hülse, mindestens 50 %, vorzugsweise mindestens 60 %, betragen.

Mit anderen Worten ist die Bruchdehnung, insbesondere die Bruchdehnung ($A_5$), des Ausgangsmaterials vor dem Umformen der Hülse, insbesondere vor dem Tiefziehen der Hülse, mindestens 50 %, vorzugsweise mindestens 60 %.

Die Verformbarkeit wird durch einen Zugversuch gemäß DIN EN ISO 6892-1 bei Raumtemperatur bestimmt.

Die Dehnungsgrenze $R_{p0,2}$, die Zugfestigkeit $R_m$ und die Dehnung A wird bis zum Bruch bestimmt. Die Dehnung A wird an der gebrochenen Probe aus der Verlängerung der ursprünglichen Messstrecke $L_0$ bestimmt:

$$A = (L_U - L_0)/L_0 \ 100 \ \% = \Delta L/L_0 \ 100 \ \%.$$

Dabei gilt: $L_U$ = Messlänge nach dem Bruch. Je nach Messlänge wird die Bruchdehnung mit Indizes versehen. Zum Beispiel ist für $A_5$ die Messlänge $L_0 = 5 \cdot d_0$ mit $d_0$ = Anfangsdurchmesser einer Rundprobe.

Die Versuche werden an Rundproben mit einem Durchmesser von 6 mm im Messbereich und einer Messlänge $L_0$ von 30 mm durchgeführt. Die Probennahme erfolgt quer zur Umformrichtung des Halbzeuges. Die Umformgeschwindigkeit beträgt bei $R_{p0,2}$ 10 MPA/s und bei $R_m$ 6,7 $10^{-3}$ 1/s (40 %/min).

Die Hülse kann eine Materialdicke von 0,10 mm - 0,40 mm, insbesondere von 0,15 mm - 0,35 mm, insbesondere von 0,20 mm - 0,30 mm, insbesondere von 0,22 mm - 0,28 mm, aufweisen. Die Hülse weist somit im Vergleich zu aus dem Stand der Technik bekannten Hülsen eine sehr geringe Wandstärke bzw. eine sehr geringe Materialdicke auf. Gleichzeitig ist die Hülse äußerst temperaturbeständig.

Die Hülse weist vorzugsweise eine Länge von 8 mm - 15 mm, insbesondere eine Länge von 9 mm - 13 mm, insbesondere eine Länge von 10 mm - 12 mm, insbesondere eine Länge von 11 mm, auf.

Die Hülse kann mindestens zwei Abschnitte, insbesondere mindestens drei Abschnitte, die unterschiedliche Außendurchmesser aufweisen, aufweisen.

Die Hülse ist vorzugsweise an die Geometrie des abzudeckenden Sensors, insbesondere des abzudeckenden Temperatursensors, angepasst.

In einer Ausführungsform kann ein erster Abschnitt einen Außendurchmesser von 1,5 mm - 2,5 mm, insbesondere von 1,8 mm - 2,2 mm, aufweisen. Ein zweiter Abschnitt kann einen Außendurchmesser von 3,0 mm - 5,0 mm, insbesondere von 3,5 mm - 4,5 mm, aufweisen. In einer besonders bevorzugten Ausführungsform der Erfindung ist zwischen dem ersten Abschnitt und dem zweiten Abschnitt ein dritter Abschnitt ausgebildet, der eine kegelstumpfförmige Kontur aufweist.

Die kegelstumpfförmige Kontur weist derartige Abmaße auf, dass ein gleichmäßiger Übergang vom Außendurchmesser des ersten Abschnitts zum Außendurchmesser des zweiten Abschnitts gebildet wird.

Die Hülse weist vorzugsweise einen Hülsenboden auf. Der Hülsenboden kann auch als Deckel bezeichnet werden. An den Hülsenboden bzw. Hülsendeckel schließt sich der erste Abschnitt mit dem ersten Außendurchmesser an. Vorzugsweise folgt darauf der dritte Abschnitt, der eine kegelstumpfförmige Kontur aufweist.

Der erste Abschnitt und/oder der zweite Abschnitt kann/können eine kegelstumpfförmige Kontur aufweisen.

Der erste Abschnitt kann in etwa die gleiche Länge wie der dritte Abschnitt aufweisen. Der zweite Abschnitt kann hingegen kürzer als der erste Abschnitt und/oder der dritte Abschnitt ausgebildet sein. Insbesondere dient der zweite Abschnitt zur Verbindung mit einem weiteren Bauteil, insbesondere einem Rohr einer Temperaturmessvorrichtung und/oder einer Übergangshülse.

Die Hülse weist eine Temperaturbeständigkeit von mindestens 1.000 °C, insbesondere von mindestens 1.100 °C, auf. Die Temperaturbeständigkeit der Hülse kann kurzfristig über 1.200 °C betragen.

Es wird eine Hülse zur Verfügung gestellt, die zum einen in vorteilhafterweise einteilig ausgebildet ist. Demnach kann die Hülse nur im geringen Maße zerstört werden und/oder auseinanderbrechen. Des Weiteren weist die Hülse eine hohe Temperaturbeständigkeit sowie eine geringe Oxidationsneigung auf. Insbesondere ist eine geringe Oxidationsneigung auch bei Temperaturen von über 950 °C gegeben. Die Hülse weist des Weiteren eine kostenoptimierte Geometrie auf. Da die Hülse im Rahmen eines Tiefziehverfahrens hergestellt werden kann, wird zur Herstellung der Hülse weniger Material verwendet, so dass insgesamt die Herstellungskosten für eine Hülse reduziert sind.

Die Hülse ist des Weiteren einfach und schnell herstellbar, da keine ergänzenden Fertigungsschritte wie Drehen und/oder Schweißen notwendig werden. Die Hülse muss möglicherweise lediglich nach dem Herstellen von Schmiermitteln befreit werden bzw. die Schmiermittel müssen entfernt werden.

Da die Hülse eine sehr hohe Temperaturbeständigkeit aufweist kann eine Temperaturmessvorrichtung für einen Turbo-Verbrennungsmotor, insbesondere einen Turbo-Ottomotor, konstruiert werden, der auf einem Platin-Sensor an der T3-Position, nämlich der Turboüberwachung, beruht. Der Platin-Sensor wird aufgrund der Hülse ausreichend vor den im Motorsystem, insbesondere in der Turboüberwachung, herrschenden Abgasatmosphäre geschützt.

Die erfindungsgemäße Temperaturmessvorrichtung kann mit der Hülse, insbesondere mit einer Schutzkappe, abgedeckt sein.

Als Abdecken ist in diesem Fall nicht zwangsläufig ein Anliegen bzw. Berühren des Sensors mit der Hülse zu verstehen. Vielmehr ist die Hülse bzw. sind die Hülsenbestandteile vom Sensor beabstandet angeordnet. Die Hülse, insbesondere die Schutzkappe, schützt somit den Sensor. Mit anderen Worten schirmt die Hülse, insbesondere die Schutzkappe, den Sensor ab.

Die Hülse ist vorzugsweise mit einem Rohr und/oder einem Kabel der Temperaturmessvorrichtung verbunden. Insbesondere ist die Hülse mit einem Rohr und/oder einem Kabel, insbesondere einem Kabelmantel, der Temperaturmessvorrichtung verschweißt. Besonders bevorzugt ist die Hülse mit einem Rohr und/oder einem Kabel, insbesondere einem Kabelmantel, der Temperaturmessvorrichtung laserverschweißt.

Die Hülse kann vorzugsweise mit einem Verguss gefüllt sein, in die der Sensor eingebettet ist. Der Verguss ist ein oxidisches Material, insbesondere ein keramisches Material, vorzugsweise hochreines Aluminiumoxid. Der Verguss wird nach Einführen des Sensors in die Hülse gebrannt. Dabei sintert die Vergussmasse und fixiert den Sensor.

In einer weiteren Ausführungsform kann die Hülse mittels einer Übergangshülse mit dem Rohr der Temperaturmessvorrichtung verbunden sein. Insbesondere ist die Hülse mittels einer Übergangshülse mit dem Rohr der Temperaturmessvorrichtung verschweißt. Besonders bevorzugt ist die Hülse mittels einer Übergangshülse mit dem Rohr der Temperaturmessvorrichtung laserverschweißt.

Zum Verschweißen bzw. Laserverschweißen der Hülse mit dem Rohr und/oder dem Kabel und/oder mit der Übergangshülse kann insbesondere der zweite Abschnitt der Hülse dienen. Mit anderen Worten ist vorzugsweise der Abschnitt der Hülse, die den größten Außendurchmesser aufweist, mit dem Rohr und/oder dem Kabel und/oder der Übergangshülse der Temperaturmessvorrichtung verschweißt, insbesondere laserverschweißt.

Ein weiterer Aspekt der Erfindung betrifft ein Verfahren zum Verbinden eines erfindungsgemäßen Kabels, mit einer Temperaturmessvorrichtung, insbesondere einer erfindungsgemäßen Temperaturmessvorrichtung.

Erfindungsgemäß wird das Kabel mit dem Sensor, insbesondere der mindestens eine Leiter des Kabels mit dem mindestens einen Anschlussdraht des Sensors, insbesondere mit dem Platinanschlussdraht des Temperatursensors, verbunden, insbesondere verschweißt, vorzugsweise laserverschweißt.

Ein weiterer nebengeordneter Aspekt der Erfindung betrifft die Verwendung einer Legierung zur Herstellung eines Kabels zum Verbinden mit einer Temperaturmessvorrichtung, insbesondere zur Herstellung eines erfindungsgemäßen Kabels.

Die Legierung weist vorzugsweise folgende Elemente auf:

25,0 - 28,0 Gew.-% Chrom (Cr),
2,0 - 3,0 Gew.-% Aluminium (Al),
1,0 - 11,0 Gew.-% Eisen (Fe),
0,01 - 0,2 Gew.-% Silizium (Si),
0,005 - 0,5 Gew.-% Mangan (Mn),
0,01 - 0,20 Gew.-% Yttrium (Y),
0,02 - 0,60 Gew.-% Titan (Ti),
0,01 - 0,2 Gew.-% Zirkon (Zr),
0,0002 - 0,05 Gew.-% Magnesium (Mg),
0,0001 - 0,05 Gew.-% Kalzium (Ca),
0,03 - 0,11 Gew.-% Kohlenstoff (C),
0,003 - 0,05 Gew.-% Stickstoff (N),
0,0005 - 0,008 Gew.-% Bor (B),
0,0001 - 0,010 Gew.-% Sauerstoff (O),
0,001 - 0,030 Gew.-% Phosphor (P),
höchstens 0,010 Gew.-% Schwefel (S),
höchstens 0,5 Gew.-% Molybdän (Mo),
höchstens 0,5 Gew.-% Wolfram (W) und
Rest Nickel (Ni).

Die genannten Bestandteile der Legierung können sich in beliebiger Kombination zu 100 % ergänzen. Dies gilt auch für die nachfolgend dargestellten Ausführungsbeispiele.

Die Legierung kann in einer besonders bevorzugten Ausführungsform folgende Elemente aufweisen:

25,3 - 26,3 Gew.-% Chrom (Cr), insbesondere 25,3 Gew.-% Chrom (Cr),
2,1 - 2,4 Gew.-% Aluminium (Al), insbesondere 2,27 Gew.-% Aluminium (Al),
9,0 - 10,5 Gew.-% Eisen (Fe), insbesondere 9,8 Gew.-% Eisen (Fe),
0,03 - 0,07 Gew.-% Silizium (Si), insbesondere 0,05 Gew.-% Silizium (Si),
0,01 - 0,03 Gew.-% Mangan (Mn), insbesondere 0,02 Gew.-% Mangan (Mn),
0,05 - 0,09 Gew.-% Yttrium (Y), insbesondere 0,07 Gew.-% Yttrium (Y),
0,15 - 0,20 Gew.-% Titan (Ti), insbesondere 0,18 Gew.-% Titan (Ti),
0,04 - 0,08 Gew.-% Zirkon (Zr), insbesondere 0,06 Gew.-% Zirkon (Zr),
0,01 - 0,015 Gew.-% Magnesium (Mg), insbesondere 0,013 Gew.-% Magnesium (Mg),
0,0015 - 0,0025 Gew.-% Kalzium (Ca), insbesondere 0,002 Gew.-% Kalzium (Ca),
0,05 - 0,09 Gew.-% Kohlenstoff (C), insbesondere 0,075 Gew.-% Kohlenstoff (C),
0,02 - 0,025 Gew.-% Stickstoff (N), insbesondere 0,023 Gew.-% Stickstoff (N),
0,0025 - 0,0035 Gew.-% Bor (B), insbesondere 0,003 Gew.-% Bor (B),

0,001 - 0,0015 Gew.-% Sauerstoff (O), insbesondere 0,0013 Gew.-% Sauerstoff (O),

0,0025 - 0,0035 Gew.-% Phosphor (P), insbesondere 0,003 Gew.-% Phosphor (P),

0,0025 - 0,0035 Gew.-% Schwefel (S), insbesondere 0,003 Gew.-% Schwefel (S),

60,0 - 64,0 Gew.-% Nickel (Ni), insbesondere 62,0 Gew.-% Nickel (Ni),

0,008 - 0,012 Gew.-% Kupfer (Cu), insbesondere 0,01 Gew.-% Kupfer (Cu),

0,036 - 0,044 Gew.-% Cobalt (Co), insbesondere 0,04 Gew.-% Cobalt (Co),

weniger als 0,01 Gew.-% Molybdän (Mo),

weniger als 0,01 Gew.-% Wolfram (W),

weniger als 0,01 Gew.-% Hafnium (Hf),

weniger als 0,01 Gew.-% Niob (Nb),

weniger als 0,01 Gew.-% Vanadium (V),

weniger als 0,01 Gew.-% Lanthan (La),

weniger als 0,01 Gew.-% Tantal (Ta) und

weniger als 0,01 Gew.-% Cer (Ce).

Des Weiteren ist ein Verfahren zum Herstellen eines erfindungsgemäßen Kabels angegeben. In den Mantel, insbesondere in den rohrförmigen Mantel, wird in einem ersten Schritt mindestens ein Leiter eingezogen. Anschließend wird der rohrförmige Mantel mit dem Dielektrikum, insbesondere mit angesinterten Formteilen aus dem Dielektrikum gefüllt. Danach erfolgt ein Herunterziehen in mehreren Schritten auf das Kabel mit dem endgültigen Durchmesser. Gemäß einer bestimten Reihenfolge werden Rekristallisationsglühungen durchgeführt.

Das Ziehen, insbesondere das Herunterziehen, des Rohlings zu einem Kabel auf einen Durchmesser von 3 mm bis 6 mm, insbesondere von 4,5 mm bis 6,0 mm, erfolgt vorzugsweise in mehreren Schritten.

Das derart hergestellte Kabel liegt anschließend in Stangenform oder gewickelt als Coil vor.

Die beschriebene Hülse, insbesondere die beschriebene Schutzkappe, kann ebenfalls mit einer keramischen Masse und/oder einem Zement befüllt sein. Insbesondere ist der Sensor, insbesondere der Temperatursensor, besonders bevorzugt der Platin-Sensor, mit einer keramischen Masse und/oder einem Zement in der Hülse, insbesondere in der Schutzkappe, mechanisch fixiert.

Bei dem Sensor, insbesondere dem Temperatursensor kann es sich um einen Platin-Sensor handeln. Des Weiteren ist es denkbar, dass ein NTC-Element, z.B. aus Langasit, als Sensor dient.

Insgesamt wird ein beispielsweise durch den Umformprozess des Ausziehens einfach herstellbares Kabel zur Ansteuerung von Sensoren, insbesondere von Temperatursensoren, zur Verfügung gestellt.

Außerdem ist das erfindungsgemäße Kabel im Zusammenhang mit einer Temperaturmessvorrichtung durch einen äußerst korrosionsbeständigen elektrischen Kontakt zum Sensor, insbesondere zu einem Platin-Sensor, gekennzeichnet. In vorteilhafterweise weist das erfindungsgemäße Kabel eine hohe Temperaturfestigkeit und Temperaturbeständigkeit auf. Dies gilt auch bei Temperaturen von über 950 °C.

Das erfindungsgemäße Kabel kann, insbesondere durch Ausbildung mit den angegebenen Legierungen, weitestgehend starr ausgebildet sein. D.h., dass das Kabel nicht zwingend flexibel und/oder biegbar ausgebildet sein muss.

Nachfolgend wird die Erfindung anhand von Ausführungsbeispielen unter Bezug auf die beigefügten schematischen Zeichnungen mit weiteren Einzelheiten näher erläutert.

In diesen zeigen:

Fig. 1: eine Darstellung eines erfindungsgemäßen Kabels im Querschnitt;

Fig. 2: eine Darstellung einer Hülse (teilweise im Querschnitt);

Fig. 3: eine Darstellung einer erfindungsgemäßen Temperaturmessvorrichtung; und

Fig. 4: eine Schnittdarstellung durch den Sensorbereich einer erfindungsgemäßen Temperaturmessvorrichtung.

Im Folgenden werden für gleiche und gleichwirkende Teile gleiche Bezugsziffern verwendet.

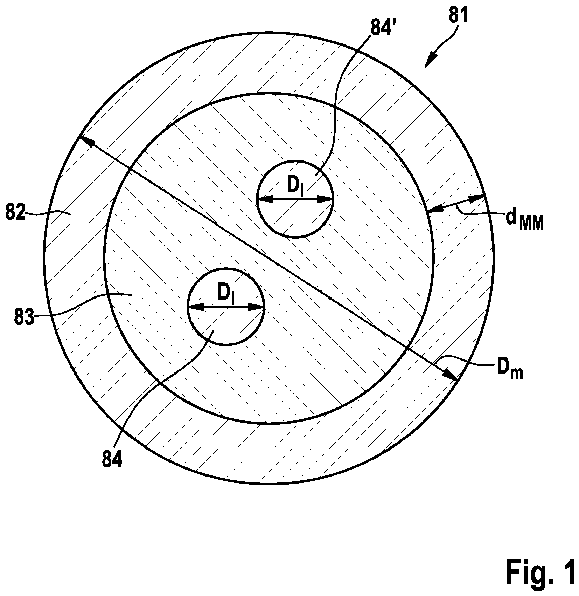

In Fig. 1 ist ein erfindungsgemäßes Kabel 81 zum Kontaktieren eines Sensors, insbesondere eines Temperatursensors, dargestellt. Das Kabel 81 umfasst einen Mantel 82, ein Dielektrikum 83 und zwei Leiter 84 und 84'. Die Leiter 84 und 84' sind in dem Mantel 82 derart angeordnet, dass die Leiter 84 und 84' von dem Mantel 82 mit Hilfe des Dielektrikums 83 räumlich getrennt sind.

Sowohl die Leiter 84 und 84' als auch der Mantel 82 sind aus einer Nickel-Chrom-Aluminium-Eisen-Legierung gebildet, wobei die Legierung

10,0 - 30,0 Gew.-% Chrom (Cr),

0,5 - 5,0 Gew.-% Aluminium (Al),

0,5 - 15,0 Gew.-% Eisen (Fe), und

50,0 - 89,0 Gew.-% Nickel (Ni) aufweist (nicht Erfindungsgemäß).

Erfindungsgemäß weist die Legierung

25,3 - 26,3 Gew.-% Chrom (Cr), insbesondere 25,3 Gew.-% Chrom (Cr),

2,1 - 2,4 Gew.-% Aluminium (Al), insbesondere 2,27 Gew.-% Aluminium (Al),

9,0 - 10,5 Gew.-% Eisen (Fe), insbesondere 9,8 Gew.-% Eisen (Fe),

0,03 - 0,07 Gew.-% Silizium (Si), insbesondere 0,05 Gew.-% Silizium (Si),

0,01 - 0,03 Gew.-% Mangan (Mn), insbesondere 0,02 Gew.-% Mangan (Mn),

0,05 - 0,09 Gew.-% Yttrium (Y), insbesondere 0,07 Gew.-% Yttrium (Y),

0,15 - 0,20 Gew.-% Titan (Ti), insbesondere 0,18 Gew.-% Titan (Ti),

0,04 - 0,08 Gew.-% Zirkon (Zr), insbesondere 0,06 Gew.-% Zirkon (Zr),

0,01 - 0,015 Gew.-% Magnesium (Mg), insbesondere 0,013 Gew.-% Magnesium (Mg),

0,0015 - 0,0025 Gew.-% Kalzium (Ca), insbesondere 0,002 Gew.-% Kalzium (Ca),

0,05 - 0,09 Gew.-% Kohlenstoff (C), insbesondere 0,075 Gew.-% Kohlenstoff (C),

0,02 - 0,025 Gew.-% Stickstoff (N), insbesondere 0,023 Gew.-% Stickstoff (N),

0,0025 - 0,0035 Gew.-% Bor (B), insbesondere 0,003 Gew.-% Bor (B),

0,001 - 0,0015 Gew.-% Sauerstoff (O), insbesondere 0,0013 Gew.-% Sauerstoff (O),

0,0025 - 0,0035 Gew.-% Phosphor (P), insbesondere 0,003 Gew.-% Phosphor (P),

0,0025 - 0,0035 Gew.-% Schwefel (S), insbesondere 0,003 Gew.-% Schwefel (S),

60,0 - 64,0 Gew.-% Nickel (Ni), insbesondere 62,0 Gew.-% Nickel (Ni),

0,008 - 0,012 Gew.-% Kupfer (Cu), insbesondere 0,01 Gew.-% Kupfer (Cu),

0,036 - 0,044 Gew.-% Cobalt (Co), insbesondere 0,04 Gew.-% Cobalt (Co),

weniger als 0,01 Gew.-% Molybdän (Mo),

weniger als 0,01 Gew.-% Wolfram (W),

weniger als 0,01 Gew.-% Hafnium (Hf),

weniger als 0,01 Gew.-% Niob (Nb),

weniger als 0,01 Gew.-% Vanadium (V),

weniger als 0,01 Gew.-% Lanthan (La),

weniger als 0,01 Gew.-% Tantal (Ta) und

weniger als 0,01 Gew.-% Cer (Ce)

auf.

Dieses Material ist besonders tiefziehfähig. Das Material eignet sich also besonders gut zur Herstellung des Kabels 81. Des Weiteren ist eine derartige Legierung besonders temperaturbeständig.

Bei der Herstellung des Kabels 81 wird der Mantel 82, die beiden Leiter 84 und 84' zusammen mit dem Dielektrikum 83 umgeformt, insbesondere gezogen, so dass das Kabel 81 entsteht.

Die Bruchdehnung des Ausgangsmaterials ist vor dem Umformen des Mantels 82 und der Leiter 84 und 84' zusammen mit dem Dielektrikum 83 mindestens 50 %, vorzugsweise mindestens 60 %.

Es ist festzustellen, dass die Leiter 84 und 84' derart in dem Mantel 82 angeordnet sind, dass die beiden Leiter 84 und 84' von dem Mantel 82 mit Hilfe des Dielektrikums 83 räumlich getrennt sind und die jeweiligen Leiter 84, 84' mit Hilfe des Dielektrikums 83 auch voneinander räumlich getrennt sind.

Der Mantel 82 ist rohrförmig ausgebildet. Dementsprechend ist der Querschnitt des Mantels 82 ringförmig ausgebildet. Der Mantel 82 weist vorzugsweise eine Materialstärke $d_{MM}$ von 0,4 mm bis 0,7 mm auf.

Der Durchmesser Dm des Mantels 82 und somit des Kabels 81 beträgt 4,5 mm bis 6,0 mm. Die beiden Leiter 84 und 84' weisen in etwa einen kreisrunden Querschnitt auf. Die Materialdicke ist somit über den Durchmesser der Leiter 84 und 84' festzustellen. Die Materialdicke bzw. der Durchmesser DI der Leiter 84 und 84' beträgt vorzugsweise 0,5 mm.

Bei dem Dielektrikum 83 handelt es sich vorliegend um einen mineralischen Werkstoff. Dieser ist aus einer Mischung aus Magnesiumoxid (MgO) und Aluminiumoxid ($Al_2O_3$) mit 10-20 Gew.-% Aluminiumoxid ($Al_2O_3$) gebildet. Nach dem wie in Fig. 1 dargestellten, umgeformten Zustand im Mantel 82 ist das Dielektrikum 83 50-70 % verdichtet.

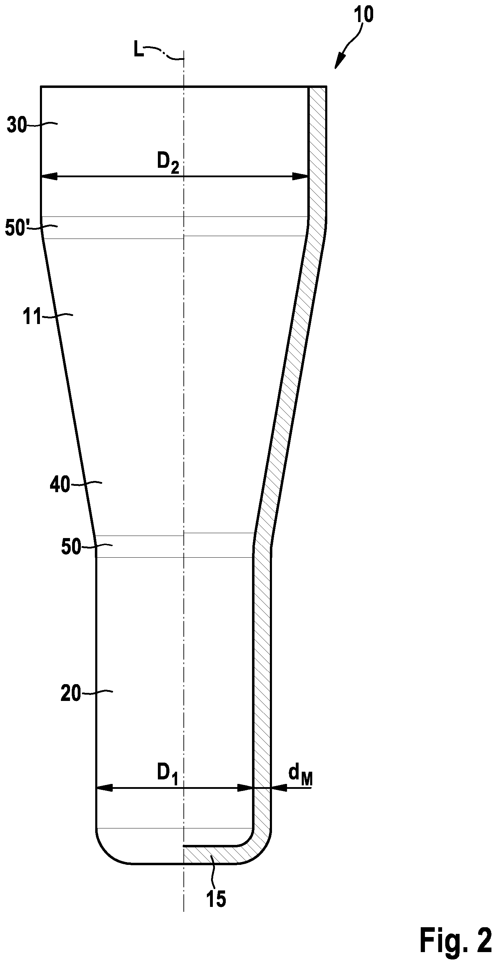

In Fig. 2 ist eine Hülse 10 dargestellt. Im von der Längsachse L aus gesehenen linken Bereich der Darstellung ist die Außenseite 11 dargestellt. Im von der Längsachse L aus gesehenen rechten Bereich der Darstellung ist die Hülse 10 im Schnitt dargestellt. Hierbei ist die Materialdicke $d_M$ der Hülse 10 zu erkennen.

Bei der Hülse 10 handelt es sich um ein umgeformtes, insbesondere tiefgezogenes, Bauteil. Die Hülse 10 ist somit einteilig, insbesondere monolithisch ausgebildet. Die dargestellte Materialdicke $d_M$ beträgt vorzugsweise 0,22 mm - 0,28 mm. In einer besonders bevorzugten Ausführungsform ist die Materialdicke $d_M$ über die gesamte Hülse hinweg gleichmäßig ausgebildet.

Die Hülse 10 ist aus einer Legierung gebildet, die

24,3 - 26,3 Gew.-% Chrom (Cr), insbesondere 25,3 Gew.-% Chrom (Cr),

2,1 - 2,4 Gew.-% Aluminium (Al), insbesondere 2,27 Gew.-% Aluminium (Al),

9,0 - 10,5 Gew.-% Eisen (Fe), insbesondere 9,8 Gew.-% Eisen (Fe),

0,03 - 0,07 Gew.-% Silizium (Si), insbesondere 0,05 Gew.-% Silizium (Si),

0,01 - 0,03 Gew.-% Mangan (Mn), insbesondere 0,02 Gew.-% Mangan (Mn),

0,05 - 0,09 Gew.-% Yttrium (Y), insbesondere 0,07 Gew.-% Yttrium (Y),

0,15 - 0,20 Gew.-% Titan (Ti), insbesondere 0,18 Gew.-% Titan (Ti),

0,04 - 0,08 Gew.-% Zirkon (Zr), insbesondere 0,06 Gew.-% Zirkon (Zr),

0,01 - 0,015 Gew.-% Magnesium (Mg), insbesondere 0,013 Gew.-% Magnesium (Mg),

0,0015 - 0,0025 Gew.-% Kalzium (Ca), insbesondere 0,002 Gew.-% Kalzium (Ca),

0,05 - 0,09 Gew.-% Kohlenstoff (C), insbesondere 0,075 Gew.-% Kohlenstoff (C),

0,02 - 0,025 Gew.-% Stickstoff (N), insbesondere 0,023 Gew.-% Stickstoff (N),

0,0025 - 0,0035 Gew.-% Bor (B), insbesondere 0,003 Gew.-% Bor (B),

0,001 - 0,0015 Gew.-% Sauerstoff (O), insbesondere 0,0013 Gew.-% Sauerstoff (O),

0,0025 - 0,0035 Gew.-% Phosphor (P), insbesondere 0,003 Gew.-% Phosphor (P),

0,0025 - 0,0035 Gew.-% Schwefel (S), insbesondere 0,003 Gew.-% Schwefel (S),

60,0 - 64,0 Gew.-% Nickel (Ni), insbesondere 62,0 Gew.-% Nickel (Ni),

0,008 - 0,012 Gew.-% Kupfer (Cu), insbesondere 0,01 Gew.-% Kupfer (Cu),

0,036 - 0,044 Gew.-% Cobalt (Co), insbesondere 0,04 Gew.-% Cobalt (Co),

weniger als 0,01 Gew.-% Molybdän (Mo),

weniger als 0,01 Gew.-% Wolfram (W),

weniger als 0,01 Gew.-% Hafnium (Hf),

weniger als 0,01 Gew.-% Niob (Nb),

weniger als 0,01 Gew.-% Vanadium (V),

weniger als 0,01 Gew.-% Lanthan (La),

weniger als 0,01 Gew.-% Tantal (Ta) und

weniger als 0,01 Gew.-% Cer (Ce)

aufweist.

Dieses Material ist besonders tiefziehfähig. Das Material eignet sich also besonders gut zur Herstellung der Hülse 10. Des Weiteren ist die Nickel-Chrom-Aluminium-Eisen-Legierung besonders temperaturbeständig.

Die Hülse 10 weist drei Abschnitte, nämlich den ersten Abschnitt 20, den zweiten Abschnitt 30 und den dritten Abschnitt 40 auf. Der dritte Abschnitt 40 ist zwischen dem ersten Abschnitt 20 und dem zweiten Abschnitt 30 ausgebildet.

Der erste Abschnitt 20 weist einen Außendurchmesser D1 auf. Der zweite Abschnitt 30 der Hülse 10 weist einen Außendurchmesser D2 auf. Der dritte Abschnitt 40 ist hingegen kugelstumpfförmig ausgebildet, so dass ein variierender Außendurchmesser ausgebildet ist. Der dritte Abschnitt 40 ist zwischen dem ersten Abschnitt 20 und dem zweiten Abschnitt 30 ausgebildet, so dass der Bereich mit einem geringeren Außendurchmesser an den ersten Abschnitt 20 anschließend ausgebildet ist. Der Bereich mit dem größten Außendurchmesser des dritten Abschnittes 40 ist an den zweiten Abschnitt 30 angrenzend ausgebildet.

Der Außendurchmesser D1 kann 1,5 mm - 2,5 mm, insbesondere 1,8 mm - 2,2 mm betragen. Der Außendurchmesser D2 des zweiten Abschnittes 30 weist 3,0 mm - 5,0 mm, insbesondere 3,5 mm - 4,5 mm, auf. Der Außendurchmesser D1 des ersten Abschnittes 20 ist geringer als der Außendurchmesser D2 des zweiten Abschnittes 30.

Am unteren Ende des ersten Abschnittes 20 ist der Hülsenboden 15 ausgebildet. Der Hülsenboden weist im vorliegenden Fall eine runde Bodenfläche auf.

In Fig. 2 ist außerdem zu erkennen, dass zwischen dem ersten Abschnitt 20 und dem dritten Abschnit 40 ein Übergangsbereich 50 ausgebildet ist. Auch zwischen dem dritten Abschnitt 40 und dem zweiten Abschnitt 30 ist ein derartiger Übergangsbereich 50' ausgebildet. Die Übergangsbereiche 50 und 50' dienen dazu, dass auf der Außenseite 11 der Hülse 10 keine scharfen Kanten ausgebildet sind. Es kommt somit zu keinen Beschädigungen von weiteren Bauteilen im eingebauten Zustand der Hülse 10.

Die Hülse 10 ist um die Längsachse L rotationssymmetrisch ausgebildet. Dies hat den Vorteil, dass eine derartige Hülse 10 einfach herzustellen ist. Insbesondere ist es möglich, die Hülse 10 im Rahmen eines Tiefziehverfahrens herzustellen. Die Hülse 10 weist eine Temperaturbeständigkeit von mindestens 1.100 °C auf.

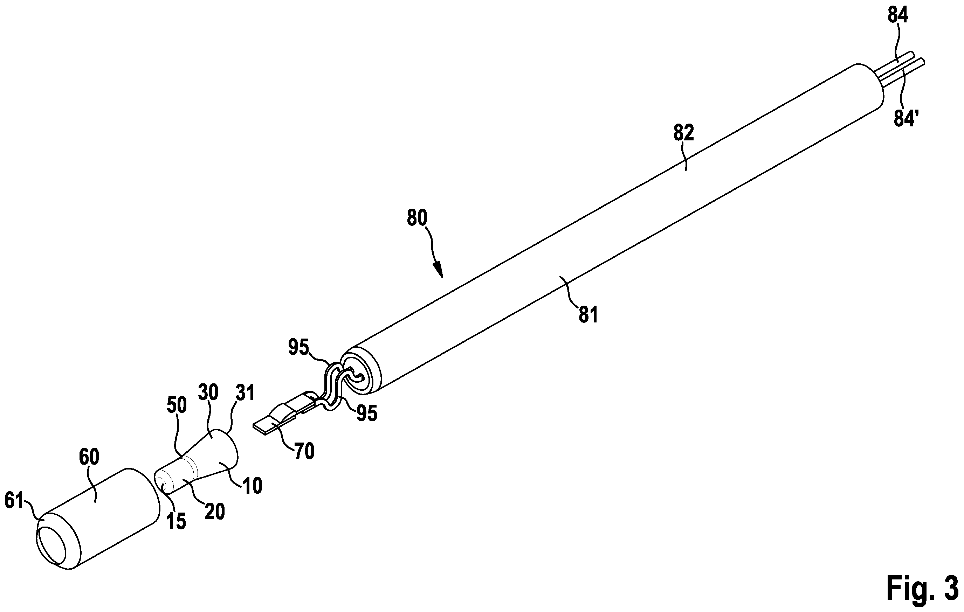

Die Hülse 10 dient somit insbesondere als Hülse einer Temperaturmessvorrichtung 80, wie diese in Fig. 3 dargestellt ist.

In dem in Fig. 3 dargestellten Ausführungsbeispiel wird eine Hülse 10 gezeigt, die lediglich einen ersten Abschnitt 20 und einen zweiten Abschnitt 30 aufweist. Zwischen dem ersten Abschnitt 20 und dem zweiten Abschnitt 30 ist ein Übergangsbereich 50 ausgebildet. Im Unterschied zur Hülse 10, wie diese in Fig. 2 dargestellt ist, ist der zweite Abschnitt 30 der Hülse 10 in Fig. 3 kegelstumpfförmig ausgebildet. Am Ende 31 des zweiten Abschnittes 30 ist vorzugsweise ein Außendurchmesser D2 ausgebildet, der dem Außendurchmesser D2 der Hülse 10 der Fig. 3 entsprechen kann. Insgesamt weist der zweite Abschnitt 30 einen variierenden Außendurchmesser auf, der im Außendurchmesser D2 am Ende 31 des zweiten Abschnittes 30 endet.

Die Hülse 10 wird mittels einer Übergangshülse 60 an einem Kabel 81 der Temperaturmessvorrichtung 80 befestigt. Die Übergangshülse 60 ist rotationssymmetrisch ausgebildet und weist einen Kragenabschnitt 61 auf. Zur Befestigung der Hülse 10 an bzw. in der Übergangshülse 60 wird die Hülse 10 zunächst mit dem Hülsenboden 15 durch die Übergangshülse 60 in Richtung des Kragenabschnittes 61 eingeführt.

Die Übergangshülse 60 wird hingegen auf das Kabel 81, insbesondere auf den Mantel 82 des Kabels 81 aufgeschoben.

Im vollkommen aufgeschobenen Zustand der Hülse 10 auf das Kabel 81 schützt die Hülse 10, insbesondere der erste Abschnitt 20 der Hülse 10, den Temperatursensor 70. Dieser Temperatursensor 70 ist im vorliegenden Fall als Platin-Sensor ausgebildet. Derartige Sensoren können Temperaturen im Bereich von -40 °C bis 1.100 °C messen.

Die Hülse 10 ist vorzugsweise mit der Übergangshülse 60 verschweißt, insbesondere laserverschweißt. Hierzu wird vorzugsweise am Kragenabschnitt 61 eine Schweißnaht ausgebildet. Insbesondere das Ende 31 des zweiten Abschnitts 30 der Hülse 10 ist in der Übergangshülse 60 innenliegend angeordnet. Zur Dämpfung von Schwingungen insbesondere zum Ausgleich von Temperaturschwankungen und weiteren mechanischen Belastungen weisen die beiden Leiter 84 und 84' am jeweils vorderen Ende, das zum Temperatursensor 70 weisend ausgebildet ist, jeweils eine S-Form bzw. eine S-Schleife 95 auf.

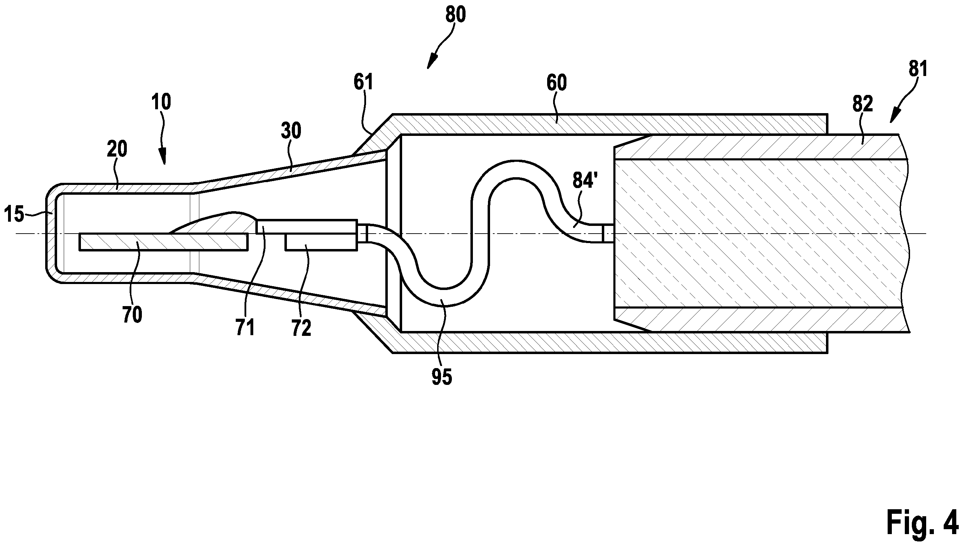

In Fig. 4 ist ein Querschnitt durch ein vorderes Ende der Temperaturmessvorrichtung 80 dargestellt. Es ist zu erkennen, dass die Hülse 10 teilweise innerhalb der Übergangshülse 60 angeordnet ist. Insbesondere der zweite Abschnitt 30, besonders bevorzugt das Ende 31 des zweiten Abschnitts 30, ist innerhalb der Übergangshülse 60 angeordnet. Im Bereich des Kragenabschnitts 61 der Übergangshülse 60 kann die in die Übergangshülse 60 eingeführte Hülse 10 mit der Übergangshülse 60 verschweißt, insbesondere laserverschweißt, werden.

Im Querschnitt ist zu erkennen, dass der Temperatursensor 70 insbesondere innerhalb des ersten Abschnitts 20 der Hülse 10 angeordnet ist. Es wird klar, dass eine Abdeckung des Temperatursensors 70 nicht ein Inkontaktkommen der Hülse 10 mit dem Temperatursensor 70 beschreibt. Vielmehr ist sowohl der Hülsenboden 15 als auch die Wandung des ersten Abschnitts 20 und/oder des zweiten Abschnitts 30 vom Temperatursensor 70 beabstandet angeordnet.

Der Temperatursensor 70 weist mindestens einen Anschlussdraht 71 auf. Dieser Anschlussdraht 71, der insbesondere als Platinanschlussdraht ausgebildet ist, ist mit mindestens einem Leiter 84, 84' des Kabels 81 einer Temperaturmessvorrichtung 80 verbunden. Vorzugsweise ist der Anschlussdraht 71 mit mindestens einem Leiter 84, 84' des Kabels 81 an der Verbindungsstelle 72 verschweißt, insbesondere laserverschweißt. Im dargestellten Querschnitt ist wiederum die S-Form bzw. die S-Schleife 95 des Leiters 84' zu erkennen. Vorzugsweise weisen beide Leiter 84 und 84' eine derartige S-Schleife 95 bzw. S-Form auf.

Bezugszeichenliste

| | |
|---|---|
| 10 | Hülse |
| 11 | Außenseite |
| 15 | Hülsenboden |
| 20 | Erster Abschnitt |
| 30 | Zweiter Abschnitt |
| 31 | Ende zweiter Abschnitt |
| 40 | Dritter Abschnitt |
| 50, 50' | Übergangsbereich |
| 60 | Übergangshülse |
| 61 | Kragenabschnitt |
| 70 | Temperatursensor |
| 71 | Anschlussdraht Sensor |
| 72 | Verbindungsstelle |
| 80 | Temperaturmessvorrichtung |
| 81 | Kabel |
| 82 | Mantel |
| 83 | Dielektrikum |
| 84, 84' | Leiter |
| 95 | S-Schleife |
| $d_M$ | Materialdicke |
| $d_{MM}$ | Materialstärke Mantel |
| Dm | Durchmesser Mantel |
| DI | Durchmesser Leiter |
| D1 | Außendurchmesser erster Abschnitt |
| D2 | Außendurchmesser zweiter Abschnitt |

L        Längsachse

**Patentansprüche**

1.  Kabel (81) zum Kontaktieren eines Sensors (70), insbesondere eines Temperatursensors,

    umfassend einen Mantel (82), ein Dielektrikum (83) und zumindest einen Leiter (84, 84'), wobei der mindestens eine Leiter (84, 84') in dem Mantel (82) derart angeordnet ist, dass der Leiter (84, 84') von dem Mantel (82) mit Hilfe des Dielektrikums (83) räumlich getrennt ist,
    **dadurch gekennzeichnet, dass**
    der mindestens eine Leiter (84, 84') und/oder der Mantel (82) aus einer Nickel-Chrom-Aluminium-Eisen-Legierung gebildet ist/sind, wobei die Legierung

    25,0 - 28,0 Gew.-% Chrom (Cr),
    2,0 - 3,0 Gew.-% Aluminium (Al),
    1,0 - 11,0 Gew.-% Eisen (Fe),
    0,01 - 0,2 Gew.-% Silizium (Si),
    0,005 - 0,5 Gew.-% Mangan (Mn),
    0,01 - 0,20 Gew.-% Yttrium (Y),
    0,02 - 0,60 Gew.-% Titan (Ti),
    0,01 - 0,2 Gew.-% Zirkon (Zr),
    0,0002 - 0,05 Gew.-% Magnesium (Mg),
    0,0001 - 0,05 Gew.-% Kalzium (Ca),
    0,03 - 0,11 Gew.-% Kohlenstoff (C),
    0,003 - 0,05 Gew.-% Stickstoff (N),
    0,0005 - 0,008 Gew.-% Bor (B),
    0,0001 - 0,010 Gew.-% Sauerstoff (O),
    0,001 - 0,030 Gew.-% Phosphor (P),
    höchstens 0,010 Gew.-% Schwefel (S),
    höchstens 0,5 Gew.-% Molybdän (Mo),
    höchstens 0,5 Gew.-% Wolfram (W) und
    Rest Nickel (Ni) aufweist.

2.  Kabel (81) nach Anspruch 1,

    **dadurch gekennzeichnet, dass**
    die Legierung Verunreinigungen, insbesondere verfahrensbedingte Verunreinigungen, aufweist, wobei die Verunreinigungen insbesondere in Gehalten von höchstens 0,5 Gew.-% Kupfer (Cu), höchstens 0,002 Gew.-% Blei (Pb), höchstens 0,002 Gew.-% Zink (Zn), höchstens 0,002 Gew.-% Zinn (Sn) eingestellt sind.

3.  Kabel (81) nach Anspruch 1 oder 2,

    **dadurch gekennzeichnet, dass**
    zwischen Titan (Ti), Zirkon (Zr), Stickstoff (N) und Kohlenstoff (C) folgende Wechselwirkungen erfüllt sind:

    (1) $0 > 7,7C - x{\cdot}a < 1,0$
    (2) mit a = PN, wenn PN > 0
    (3) bzw. a = 0, wenn PN $\leq$ 0
    (4) und

$$x = (1,0Ti + 1,06Zr)/(0,251Ti + 0,132Zr)$$

    (5) wobei

$$PN = 0,251Ti + 0,132Zr - 0,857N,$$

wobei Ti, Zr, N, C die Konzentration der betreffenden Element in Gew.-% sind.

4. Kabel (81) nach einem vorhergehenden Ansprüchen,

   **dadurch gekennzeichnet, dass**
   die Legierung
   25,3 - 26,3 Gew.-% Chrom (Cr), insbesondere 25,3 Gew.-% Chrom (Cr),
   2,1 - 2,4 Gew.-% Aluminium (Al), insbesondere 2,27 Gew.-% Aluminium (Al),
   9,0 - 10,5 Gew.-% Eisen (Fe), insbesondere 9,8 Gew.-% Eisen (Fe),
   0,03 - 0,07 Gew.-% Silizium (Si), insbesondere 0,05 Gew.-% Silizium (Si),
   0,01 - 0,03 Gew.-% Mangan (Mn), insbesondere 0,02 Gew.-% Mangan (Mn),
   0,05 - 0,09 Gew.-% Yttrium (Y), insbesondere 0,07 Gew.-% Yttrium (Y),
   0,15 - 0,20 Gew.-% Titan (Ti), insbesondere 0,18 Gew.-% Titan (Ti),
   0,04 - 0,08 Gew.-% Zirkon (Zr), insbesondere 0,06 Gew.-% Zirkon (Zr),
   0,01 - 0,015 Gew.-% Magnesium (Mg), insbesondere 0,013 Gew.-% Magnesium (Mg),
   0,0015 - 0,0025 Gew.-% Kalzium (Ca), insbesondere 0,002 Gew.-% Kalzium (Ca),
   0,05 - 0,09 Gew.-% Kohlenstoff (C), insbesondere 0,075 Gew.-% Kohlenstoff (C),
   0,02 - 0,025 Gew.-% Stickstoff (N), insbesondere 0,023 Gew.-% Stickstoff (N),
   0,0025 - 0,0035 Gew.-% Bor (B), insbesondere 0,003 Gew.-% Bor (B),
   0,001 - 0,0015 Gew.-% Sauerstoff (O), insbesondere 0,0013 Gew.-% Sauerstoff (O),
   0,0025 - 0,0035 Gew.-% Phosphor (P), insbesondere 0,003 Gew.-% Phosphor (P),
   0,0025 - 0,0035 Gew.-% Schwefel (S), insbesondere 0,003 Gew.-% Schwefel (S),
   60,0 - 64,0 Gew.-% Nickel (Ni), insbesondere 62,0 Gew.-% Nickel (Ni),
   0,008 - 0,012 Gew.-% Kupfer (Cu), insbesondere 0,01 Gew.-% Kupfer (Cu),
   0,036 - 0,044 Gew.-% Cobalt (Co), insbesondere 0,04 Gew.-% Cobalt (Co),
   weniger als 0,01 Gew.-% Molybdän (Mo),
   weniger als 0,01 Gew.-% Wolfram (W),
   weniger als 0,01 Gew.-% Hafnium (Hf),
   weniger als 0,01 Gew.-% Niob (Nb),
   weniger als 0,01 Gew.-% Vanadium (V),
   weniger als 0,01 Gew.-% Lanthan (La),
   weniger als 0,01 Gew.-% Tantal (Ta) und
   weniger als 0,01 Gew.-% Cer (Ce)
   aufweist.

5. Kabel (81) nach einem der vorhergehenden Ansprüche,

   **dadurch gekennzeichnet, dass**
   der Mantel (82) und der mindestens eine Leiter (84, 84') zusammen mit dem Dielektrikum (83) umgeformt, insbesondere gezogen, sind, so dass das Kabel (81) entsteht.

6. Kabel (81) nach Anspruch 5,

   **dadurch gekennzeichnet, dass**
   die Bruchdehnung des Ausgangsmaterials vor dem Umformen des Mantels (82) und des mindestens einen Leiters (84, 84') zusammen mit dem Dielektrikum (83), insbesondere vor dem Ziehen des Mantels (82) und des mindestens einen Leiters (84, 84') zusammen mit dem Dielektrikum (83), mindestens 50 %, vorzugsweise mindestens 60 %, ist.

7. Kabel (81) nach einem der vorhergehenden Ansprüche,

   **dadurch gekennzeichnet, dass**
   das Kabel (81) zumindest zwei Leiter (84, 84') aufweist, die derart in dem Mantel (82) angeordnet sind, dass der jeweilige Leiter (84, 84') von dem Mantel (82) mit Hilfe des Dielektrikums (83) räumlich getrennt ist und die jeweiligen Leiter (84, 84') in dem Mantel (82) mit Hilfe des Dielektrikums (83) räumlich voneinander getrennt sind.

8. Kabel (81) nach einem der vorhergehenden Ansprüche,

> **dadurch gekennzeichnet, dass**
> der Mantel (82) eine Materialstärke ($d_{MM}$) von 0,4 mm - 0,7 mm aufweist.

9. Kabel (81) nach einem der vorhergehenden Ansprüche,

> **dadurch gekennzeichnet, dass**
> der Mantel (82) einen Durchmesser (Dm) von 3,0 mm - 6,0 mm, insbesondere von 4,5 mm - 6,0 mm, aufweist.

10. Kabel (81) nach einem der vorhergehenden Ansprüche,

> **dadurch gekennzeichnet, dass**
> ein/der Leiter (84, 84') eine Materialdicke (DI) von 0,25 mm - 1,0 mm, insbesondere von 0,3 mm - 0,7 mm, insbesondere von 0,45 mm - 0,55 mm, besonders bevorzugt von 0,5 mm, aufweist.

11. Kabel (81) nach einem der vorhergehenden Ansprüche,

> **dadurch gekennzeichnet, dass**
> ein Teil eines/des Leiters (84, 84') S-förmig (95) ausgebildet ist.

12. Kabel (81) nach einem der vorhergehenden Ansprüche,

> **dadurch gekennzeichnet, dass**
> das Dielektrikum (83) einen mineralischen Werkstoff, insbesondere Magnesiumoxid (MgO) und/oder Aluminiumoxid ($Al_2O_3$) und/oder Mischungen aus beiden, besonders bevorzugt eine Mischung aus Magnesiumoxid (MgO) und Aluminiumoxid ($Al_2O_3$) mit 10 - 20 Gew.-% Aluminiumoxid ($Al_2O_3$), aufweist.

13. Kabel (81) nach Anspruch 5 oder 6,

> **dadurch gekennzeichnet, dass**
> das Dielektrikum (83) in dem Mantel (82) nach dem Umformen zu 50 % bis 70 % verdichtet vorliegt.

14. Kabel (81) nach einem der vorhergehenden Ansprüche,

> **gekennzeichnet durch**
> eine Temperaturbeständigkeit von mindestens 1.000 °C, vorzugsweise mindestens 1.100 °C.

15. Temperaturmessvorrichtung (80), insbesondere zur Anwendung in einem Turbo-Verbrennungsmotor, umfassend einen Sensor (70), insbesondere einen Temperatursensor, insbesondere einen Platin-Sensor,

> **dadurch gekennzeichnet, dass**
> der Sensor (70) mit zumindest einem Kabel (81) nach einem der Ansprüche 1 bis 14 verbunden ist.

16. Temperaturmessvorrichtung (80) nach Anspruch 15,

> **dadurch gekennzeichnet, dass**
> der Sensor (70) zumindest einen Anschlussdraht (71), insbesondere der Temperatursensor zumindest einen Platinanschlussdraht, aufweist, wobei der Anschlussdraht (71), insbesondere der Platinanschlussdraht, zumindest mit einem Leiter (84, 84') des Kabels (81) verbunden, insbesondere verschweißt, vorzugsweise laserverschweißt, ist.

17. Verfahren zum Verbinden eines Kabels (81) nach einem der Ansprüche 1 bis 14 mit einer Temperaturmessvorrichtung (80),

> **dadurch gekennzeichnet, dass**
> das Kabel (81) mit dem Sensor (70) verbunden wird, insbesondere der Leiter (84, 84') des Kabels (81) mit dem Anschlussdraht (71) des Sensors (70), insbesondere mit dem Platinanschlussdraht des Temperatursensors, verbunden, insbesondere verschweißt, vorzugsweise laserverschweißt, wird.

**18.** Verwendung einer Legierung, die

25,0 - 28,0 Gew.-% Chrom (Cr),
2,0 - 3,0 Gew.-% Aluminium (Al),
1,0 - 11,0 Gew.-% Eisen (Fe),
0,01 - 0,2 Gew.-% Silizium (Si),
0,005 - 0,5 Gew.-% Mangan (Mn),
0,01 - 0,20 Gew.-% Yttrium (Y),
0,02 - 0,60 Gew.-% Titan (Ti),
0,01 - 0,2 Gew.-% Zirkon (Zr),
0,0002 - 0,05 Gew.-% Magnesium (Mg),
0,0001 - 0,05 Gew.-% Kalzium (Ca),
0,03 - 0,11 Gew.-% Kohlenstoff (C),
0,003 - 0,05 Gew.-% Stickstoff (N),
0,0005 - 0,008 Gew.-% Bor (B),
0,0001 - 0,010 Gew.-% Sauerstoff (O),
0,001 - 0,030 Gew.-% Phosphor (P),
höchstens 0,010 Gew.-% Schwefel (S),
höchstens 0,5 Gew.-% Molybdän (Mo),
höchstens 0,5 Gew.-% Wolfram (W) und
Rest Nickel (Ni) aufweist
zur Herstellung einer Kabels (81) zum Verbinden mit einer Temperaturmessvorrichtung (80).

**Claims**

**1.** A cable (81) for contacting a sensor (70), in particular a temperature sensor,
comprising a sheath (82), a dielectric (83) and at least one conductor (84, 84'), wherein the at least one conductor (84, 84') is disposed in the sheath (82) in a manner such that the conductor (84, 84') is spatially separated from the sheath (82) with the aid of the dielectric (83),
**characterized in that**
the at least one conductor (84, 84') and/or the sheath (82) is/are formed from a nickel-chromium-aluminium-iron alloy, wherein the alloy comprises

25.0 - 28.0 % by weight of chromium (Cr),
2.0 - 3.0 % by weight of aluminium (Al),
1.0 - 11.0 % by weight of iron (Fe),
0.01 - 0.2 % by weight of silicon (Si),
0.005 - 0.5 % by weight of manganese (Mn),
0.01 - 0.20 % by weight of yttrium (Y),
0.02 - 0.60 % by weight of titanium (Ti),
0.01 - 0.2 % by weight of zirconium (Zr),
0.0002 - 0.05 % by weight of magnesium (Mg),
0.0001 - 0.05 % by weight of calcium (Ca),
0.03 - 0.11 % by weight of carbon (C),
0.003 - 0.05 % by weight of nitrogen (N),
0.0005 - 0.008 % by weight of boron (B),
0.0001 - 0.010 % by weight of oxygen (O),
0.001 - 0.030 % by weight of phosphorus (P),
at most 0.010 % by weight of sulphur (S),
at most 0.5 % by weight of molybdenum (Mo),
at most 0.5 % by weight of tungsten (W), and
the balance being nickel (Ni).

**2.** The cable (81) as claimed in claim 1,
**characterized in that**
the alloy comprises impurities, in particular process-related impurities, wherein the impurities are in particular present in quantities of at most 0.5 % by weight of copper (Cu), at most 0.002 % by weight of lead (Pb), at most 0.002 % by weight of zinc (Zn), at most 0.002 % by weight of tin (Sn).

3. The cable (81) as claimed in claim 1 or claim 2,
**characterized in that**
the following relationships between titanium (Ti), zirconium (Zr), nitrogen (N) and carbon (C) are satisfied:

(1) 0 > 7.7C - x•a < 1.0
(2) with a = PN, when PN > 0
(3) or a = 0, when PN ≤ 0
(4) and

$$x = (1.0Ti + 1.06Zr)/(0.251Ti + 0.132Zr)$$

(5) wherein

$$PN = 0.251Ti + 0.132Zr - 0.857N,$$

wherein Ti, Zr, N, C are the concentration of the relevant element as a % by weight.

4. The cable (81) as claimed in one of the preceding claims,
**characterized in that**
the alloy comprises

25.3 - 26.3 % by weight of chromium (Cr), in particular 25.3 % by weight of chromium (Cr),
2.1 - 2.4 % by weight of aluminium (Al), in particular 2.27 % by weight of aluminium (Al),
9.0 - 10.5 % by weight of iron (Fe), in particular 9.8 % by weight of iron (Fe),
0.03 - 0.07 % by weight of silicon (Si), in particular 0.05 % by weight of silicon (Si),
0.01 - 0.03 % by weight of manganese (Mn), in particular 0.02 % by weight of manganese (Mn),
0.05 - 0.09 % by weight of yttrium (Y), in particular 0.07 % by weight of yttrium (Y),
0.15 - 0.20 % by weight of titanium (Ti), in particular 0.18 % by weight of titanium (Ti),
0.04 - 0.08 % by weight of zirconium (Zr), in particular 0.06 % by weight of zirconium (Zr),
0.01 - 0.015 % by weight of magnesium (Mg), in particular 0.013 % by weight of magnesium (Mg),
0.0015 - 0.0025 % by weight of calcium (Ca), in particular 0.002 % by weight of calcium (Ca),
0.05 - 0.09 % by weight of carbon (C), in particular 0.075 % by weight of carbon (C),
0.02 - 0.025 % by weight of nitrogen (N), in particular 0.023 % by weight of nitrogen (N),
0.0025 - 0.0035 % by weight of boron (B), in particular 0.003 % by weight of boron (B),
0.001 - 0.0015 % by weight of oxygen (O), in particular 0.0013 % by weight of oxygen (O),
0.0025 - 0.0035 % by weight of phosphorus (P), in particular 0.003 % by weight of phosphorus (P),
0.0025 - 0.0035 % by weight of sulphur (S), in particular 0.003 % by weight of sulphur (S),
60.0 - 64.0 % by weight of nickel (Ni), in particular 62.0 % by weight of nickel (Ni),
0.008 - 0.012 % by weight of copper (Cu), in particular 0.01 % by weight of copper (Cu),
0.036 - 0.044 % by weight of cobalt (Co), in particular 0.04 % by weight of cobalt (Co),
less than 0.01 % by weight of molybdenum (Mo),
less than 0.01 % by weight of tungsten (W),
less than 0.01 % by weight of hafnium (Hf),
less than 0.01 % by weight of niobium (Nb),
less than 0.01 % by weight of vanadium (V),
less than 0.01 % by weight of lanthanum (La),
less than 0.01 % by weight of tantalum (Ta), and
less than 0.01 % by weight of cerium (Ce).

5. The cable (81) as claimed in one of the preceding claims,
**characterized in that**
the sheath (82) and the at least one conductor (84, 84') together with the dielectric (83) have been formed, in particular drawn, so that the cable (81) is formed.

6. The cable (81) as claimed in claim 5,
**characterized in that**
the elongation at break for the starting material prior to forming of the sheath (82) and of the at least one conductor (84, 84') together with the dielectric (83), in particular prior to drawing the sheath (82) and the at least one conductor (84, 84') together with the dielectric (83), is at least 50 %, preferably at least 60 %.

7. The cable (81) as claimed in one of the preceding claims,
**characterized in that**
the cable (81) has at least two conductors (84, 84') which are disposed in the sheath (82) in a manner such that the respective conductor (84, 84') is spatially separated from the sheath (82) with the aid of the dielectric (83) and the respective conductors (84, 84') are spatially separated from each other in the sheath (82) with the aid of the dielectric (83).

8. The cable (81) as claimed in one of the preceding claims,
**characterized in that**
the sheath (82) has a material thickness ($d_{MM}$) of 0.4 mm - 0.7 mm.

9. The cable (81) as claimed in one of the preceding claims,
**characterized in that**
the sheath (82) has a diameter (Dm) of 3.0 mm - 6.0 mm, in particular of 4.5 mm - 6.0 mm.

10. The cable (81) as claimed in one of the preceding claims,
**characterized in that**
a/the conductor (84, 84') has a material thickness (Dl) of 0.25 mm - 1.0 mm, in particular of 0.3 mm - 0.7 mm, in particular of 0.45 mm - 0.55 mm, particularly preferably of 0.5 mm.

11. The cable (81) as claimed in one of the preceding claims,
**characterized in that**
a portion of a/the conductor (84, 84') is S-shaped (95) in configuration.

12. The cable (81) as claimed in one of the preceding claims,
**characterized in that**
the dielectric (83) comprises a mineral substance, in particular magnesium oxide (MgO) and/or aluminium oxide ($Al_2O_3$) and/or mixtures of the two, particularly preferably a mixture of magnesium oxide (MgO) and aluminium oxide ($Al_2O_3$) with 10 % - 20 % by weight of aluminium oxide ($Al_2O_3$).

13. The cable (81) as claimed in claim 5 or claim 6,
**characterized in that**
the dielectric (83) in the sheath (82) after forming has been 50 % to 70 % compacted.

14. The cable (81) as claimed in one of the preceding claims,
**characterized by**
a temperature resistance of at least 1000 °C, preferably at least 1100 °C.

15. A temperature measuring device (80), in particular for use in a turbo combustion engine, comprising a sensor (70), in particular a temperature sensor, in particular a platinum sensor,
**characterized in that**
the sensor (70) is connected to at least one cable (81) as claimed in one of claims 1 to 14.

16. The temperature measuring device (80) as claimed in claim 15,
**characterized in that**
the sensor (70) comprises at least one connecting wire (71), in particular the temperature sensor comprises at least one platinum connecting wire, wherein the connecting wire (71), in particular the platinum connecting wire, is connected to at least one conductor (84, 84') of the cable (81), in particular welded, preferably laser welded.

17. A method for connecting a cable (81) as claimed in one of claims 1 to 14 to a temperature measuring device (80),
**characterized in that**
the cable (81) is connected to the sensor (70), in particular the conductor (84, 84') of the cable (81) is connected to the connecting wire (71) of the sensor (70), in particular to the platinum connecting wire of the temperature sensor, in particular welded, preferably laser welded.

18. Use of an alloy which comprises
25.0 - 28.0 % by weight of chromium (Cr),
2.0 - 3.0 % by weight of aluminium (Al),
1.0 - 11.0 % by weight of iron (Fe),
0.01 - 0.2 % by weight of silicon (Si),
0.005 - 0.5 % by weight of manganese (Mn),
0.01 - 0.20 % by weight of yttrium (Y),
0.02 - 0.60 % by weight of titanium (Ti),
0.01 - 0.2 % by weight of zirconium (Zr),
0.0002 - 0.05 % by weight of magnesium (Mg),
0.0001 - 0.05 % by weight of calcium (Ca),
0.03 - 0.11 % by weight of carbon (C),
0.003 - 0.05 % by weight of nitrogen (N),
0.0005 - 0.008 % by weight of boron (B),
0.0001 - 0.010 % by weight of oxygen (O),
0.001 - 0.030 % by weight of phosphorus (P),
at most 0.010 % by weight of sulphur (S),
at most 0.5 % by weight of molybdenum (Mo),
at most 0.5 % by weight of tungsten (W), and
the balance being nickel (Ni),
for the manufacture of a cable (81) for connecting to a temperature measuring device (80).

## Revendications

1. Câble (81), destiné à mettre en contact un capteur (70), notamment un capteur de température, comprenant une gaine (82), un diélectrique (83) et au moins un conducteur (84, 84'), l'au moins un conducteur (84, 84') étant placé dans la gaine (82), de telle sorte que le conducteur (84, 84') soit physiquement séparé de la gaine (82) à l'aide du diélectrique (83),
   **caractérisé en ce que**
   l'au moins un conducteur (84, 84') et/ou la gaine (82) est/sont constitué(e)s d'un alliage nickel-chrome-aluminium-fer, l'alliage comportant
   de 25,0 à 28,0 % en poids de chrome (Cr),
   de 2,0 à 3,0 % en poids d'aluminium (Al),
   de 1,0 à 11,0 % en poids de fer (Fe),
   de 0,01 à 0,2 % en poids de silicium (Si),
   de 0,005 à 0,5 % en poids de manganèse (Mn),
   de 0,01 à 0,20 % en poids d'yttrium (Y),
   de 0,02 à 0,60 % en poids de titane (Ti),
   de 0,01 à 0,2 % en poids de zircon (Zr),
   de 0,0002 à 0,05 % en poids de magnésium (Mg),
   de 0,0001 à 0,05 % en poids de calcium (Ca),
   de 0,03 à 0,11 % en poids de carbone (C),
   de 0,003 à 0,05 % en poids d'azote (N),
   de 0,0005 à 0,008 % en poids de bore (B),
   de 0,0001 à 0,010 % en poids d'oxygène (O),
   de 0,001 à 0,030 % en poids de phosphore (P),
   au maximum 0,010 % en poids de soufre (S),
   au maximum 0,5 % en poids de molybdène (Mo),
   au maximum 0,5 % en poids de tungstène (W) et
   le reste de nickel (Ni).

2. Câble (81) selon la revendication 1,
   **caractérisé en ce que**
   l'alliage comporte des impuretés, notamment des impuretés dues au procédé, les impuretés étant réglées notamment à des teneurs d'au maximum 0,5 % en poids de cuivre (Cu), d'au maximum 0,002 % en poids de plomb (Pb), d'au maximum 0,002 % en poids de zinc (Zn), d'au maximum 0,002 % en poids d'étain (Sn).

3. Câble (81) selon la revendication 1 ou 2,
   **caractérisé en ce**
   **qu'**entre le titane (Ti), le zircon (Zr), l'azote (N) et le carbone (C), les interactions suivantes sont satisfaites :

   (1) 0 > 7,7C à x•a < 1,0
   (2) avec a = PN, si PN > 0
   (3) ou a = 0, si PN ≤ 0
   (4) et

   ```
   (4) et x = (1,0Ti + 1,06Zr)/(0,251Ti + 0,132Zr)
   ```

   (5) PN étant = à 0,251Ti + 0,132Zr à 0,857N,

   Ti, Zr, N, C étant la concentration des éléments concernés en % en poids.

4. Câble (81) selon l'une quelconque des revendications précédentes,
   **caractérisé en ce que**
   l'alliage comporte
   de 25,3 à 26,3 % en poids de chrome (Cr), notamment 25,3 % en poids chrome (Cr),
   de 2,1 à 2,4 % en poids d'aluminium (Al), notamment 2,27 % en poids d'aluminium (Al),
   de 9,0 à 10,5 % en poids de fer (Fe), notamment 9,8 % en poids de fer (Fe),
   de 0,03 à 0,07 % en poids de silicium (Si), notamment 0,05 % en poids de silicium (Si),
   de 0,01 à 0,03 % en poids de manganèse (Mn), notamment 0,02 % en poids de manganèse (Mn),
   de 0,05 à 0,09 % en poids d'yttrium (Y), notamment 0,07 % en poids d'yttrium (Y),
   de 0,15 à 0,20 % en poids de titane (Ti), notamment 0,18 % en poids de titane (Ti),
   de 0,04 à 0,08 % en poids de zircon (Zr), notamment 0,06 % en poids de zircon (Zr),
   de 0,01 à 0,015 % en poids de magnésium (Mg), notamment 0,013 % en poids de magnésium (Mg),
   de 0,0015 à 0,0025 % en poids de calcium (Ca), notamment 0,002 % en poids de calcium (Ca),
   de 0,05 à 0,09 % en poids de carbone (C), notamment 0,075 % en poids de carbone (C),
   de 0,02 à 0,025 % en poids d'azote (N), notamment 0,023 % en poids d'azote (N),
   de 0,0025 à 0,0035 % en poids de bore (B), notamment 0,003 % en poids de bore (B),
   de 0,001 à 0,0015 % en poids d'oxygène (0), notamment 0,0013 % en poids d'oxygène (0),
   de 0,0025 à 0,0035 % en poids de phosphore (P), notamment 0,003 % en poids de phosphore (P),
   de 0,0025 à 0,0035 % en poids de soufre (S), notamment 0,003 % en poids de soufre (S),
   de 60,0 à 64,0 % en poids de nickel (Ni), notamment 62,0 % en poids de nickel (Ni),
   de 0,008 à 0,012 % en poids de cuivre (Cu), notamment 0,01 % en poids de cuivre (Cu),
   de 0,036 à 0,044 % en poids de cobalt (Co), notamment 0,04 % en poids de cobalt (Co),
   moins de 0,01 % en poids de molybdène (Mo),
   moins de 0,01 % en poids de tungstène (W),
   moins de 0,01 % en poids d'hafnium (Hf),
   moins de 0,01 % en poids de niobium (Nb),
   moins de 0,01 % en poids de vanadium (V),
   moins de 0,01 % en poids de lanthane (La),
   moins de 0,01 % en poids de tantale (Ta) et
   moins de 0,01 % en poids dé cérium (Ce).

5. Câble (81) selon l'une quelconque des revendications précédentes,
   **caractérisé en ce que**
   la gaine (82) et l'au moins un conducteur (84, 84') sont transformés, notamment étirés conjointement avec le diélectrique (83), de sorte à donner naissance au câble (81).

6. Câble (81) selon la revendication 5,
   **caractérisé en ce que**
   l'allongement à la rupture de la matière de départ avant la transformation de la gaine (82) et de l'au moins un conducteur (84, 84') conjointement avec le diélectrique (83), notamment avant l'étirage de la gaine (82) et de l'au moins un conducteur (84, 84') conjointement avec le diélectrique (83) est d'au moins 50 %, de préférence d'au moins 60 %.

7.  Câble (81) selon l'une quelconque des revendications précédentes,
    **caractérisé en ce que**
    le câble (81) comporte au moins deux conducteurs (84, 84') qui sont placés dans la gaine (82) de telle sorte que le conducteur (84, 84') respectif soit physiquement séparé de la gaine (82) à l'aide du diélectrique (83) et que les conducteurs (84, 84') respectifs soient physiquement séparés les uns des autres dans la gaine (82) à l'aide du diélectrique (83) .

8.  Câble (81) selon l'une quelconque des revendications précédentes,
    **caractérisé en ce que**
    la gaine (82) présente une épaisseur de matière ($d_{MM}$) de 0,4 mm à 0,7 mm.

9.  Câble (81) selon l'une quelconque des revendications précédentes,
    **caractérisé en ce que**
    la gaine (82) présente un diamètre (Dm) de 3,0 mm à 6,0 mm, notamment de 4,5 mm à 6,0 mm.

10. Câble (81) selon l'une quelconque des revendications précédentes,
    **caractérisé**
    **en ce qu'**un/ **en ce que** le conducteur (84, 84') présente une épaisseur de matière (DI) de 0,25 mm à 1,0 mm, notamment de 0,3 mm à 0,7 mm, notamment de 0,45 mm à 0,55 mm, de manière particulièrement préférentielle, de 0,5 mm.

11. Câble (81) selon l'une quelconque des revendications précédentes,
    **caractérisé**
    **en ce qu'**une partie d'un/du conducteur (84, 84') est conçue en forme de S (95).

12. Câble (81) selon l'une quelconque des revendications précédentes,
    **caractérisé en ce que**
    le diélectrique (83) comporte un matériau minéral, notamment de l'oxyde de magnésium (MgO) et/ou de l'oxyde d'aluminium ($Al_2O_3$) et/ou des mélanges des deux, de manière particulièrement préférentielle, un mélange d'oxyde de magnésium (MgO) et d'oxyde d'aluminium ($Al_2O_3$) avec de 10 à 20 % en poids d'oxyde d'aluminium ($Al_2O_3$) .

13. Câble (81) selon la revendication 5 ou 6,
    **caractérisé**
    **en ce qu'**après la transformation, le diélectrique (83) se présente en étant comprimé à de 50 % à 70 % dans la gaine (82).

14. Câble (81) selon l'une quelconque des revendications précédentes,
    **caractérisé par**
    une résistance aux températures d'au moins 1.000 °C, de préférence, d'au moins 1.100 °C.

15. Dispositif de mesure de la température (80), notamment destiné à être utilisé dans un turbomoteur à combustion, comprenant un capteur (70), notamment un capteur de température, notamment un capteur en platine,
    **caractérisé en ce que**
    le capteur (70) est relié avec au moins un câble (81) selon l'une quelconque des revendications 1 à 14.

16. Dispositif de mesure de la température (80) selon la revendication 15,
    **caractérisé en ce que**
    le capteur (70) comporte au moins un fil de raccordement (71), notamment le capteur de température comporte au moins un fil de raccordement en platine, le fil de raccordement (71), notamment le fil de raccordement en platine étant relié, notamment soudé, de préférence soudé au laser avec au moins un conducteur (84, 84') du câble (81).

17. Procédé, destiné à relier un câble (81) selon l'une quelconque des revendications 1 à 14 avec un dispositif de mesure de la température (80),
    **caractérisé**

**en ce qu'**on relie, notamment on soude, de préférence, on soude au laser le câble (81) avec le capteur (70), notamment le conducteur (84, 84') du câble (81) avec le fil de raccordement (71) du capteur (70), notamment avec le fil de raccordement en platine du capteur de température.

18. Utilisation d'un alliage qui comporte
    de 25,0 à 28,0 % en poids de chrome (Cr),
    de 2,0 à 3,0 % en poids d'aluminium (Al),
    de 1,0 à 11,0 % en poids de fer (Fe),
    de 0,01 à 0,2 % en poids de silicium (Si),
    de 0,005 à 0,5 % en poids de manganèse (Mn),
    de 0,01 à 0,20 % en poids d'yttrium (Y),
    de 0,02 à 0,60 % en poids de titane (Ti),
    de 0,01 à 0,2 % en poids de zircon (Zr),
    de 0,0002 à 0,05 % en poids de magnésium (Mg),
    de 0,0001 à 0,05 % en poids de calcium (Ca),
    de 0,03 à 0,11 % en poids de carbone (C),
    de 0,003 à 0,05 % en poids d'azote (N),
    de 0,0005 à 0,008 % en poids de bore (B),
    de 0,0001 à 0,010 % en poids d'oxygène (0),
    de 0,001 à 0,030 % en poids de phosphore (P),
    au maximum 0,010 % en poids de soufre (S),
    au maximum 0,5 % en poids de molybdène (Mo),
    au maximum 0,5 % en poids de tungstène (W) et
    le reste de nickel (Ni)
    pour la fabrication d'un câble (81) destiné à être relié avec un dispositif de mesure de la température (80).

Fig. 1

**Fig. 2**

EP 3 475 957 B1

**Fig. 3**

Fig. 4

EP 3 475 957 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008104259 A2